# EUROPEAN PATENT APPLICATION

(11) **EP 4 679 604 A1**
(43) Date of publication of application: **14.01.2026**
(21) Application number: 24767257.9
(22) Date of filing: 08.03.2024
(51) Int. Cl.: H01M 50/35, H01G 11/14, H01G 11/78, H01M 50/204, H01M 50/209, H01M 50/291, H01M 50/342, H01M 50/571, H01M 50/588, H01M 50/593

(54) **POWER STORAGE DEVICE**

(30) Priority: 08.03.2023 JP 2023035317; 08.03.2023 JP 2023035319
(71) Applicant: GS Yuasa International Ltd., Kisshoin, Minami-ku, Kyoto-shi, Kyoto 601-8520 (JP)
(72) Inventor: YUASA, Eiji, Kyoto-shi, Kyoto 601-8520 (JP); NISHIMURA, Yosuke, Kyoto-shi, Kyoto 601-8520 (JP); KAWAKAMI, Takayuki, Kyoto-shi, Kyoto 601-8520 (JP)
(74) Representative: Grünecker Patent- und Rechtsanwälte PartG mbB
(86) International application number: PCT/JP2024/009156
(87) International publication number: WO 2024/185892

(57) **Abstract**

An energy storage apparatus of an embodiment includes: a plurality of energy storage devices including a gas release valve and arranged in a predetermined direction; an elongated member; a sandwiched member sandwiched between the plurality of energy storage devices and the elongated member; and an adjacent member disposed between the energy storage devices. The adjacent member includes an adjacent member main body located between the energy storage devices, and a locking piece. The locking piece includes a locking piece main body extending from the adjacent member main body along the elongated member in a facing direction of the gas release valve and the elongated member, and a locking portion extending in an extending direction of the elongated member from a position spaced apart from the adjacent member main body in the locking piece main body, or a locking portion extending in a direction orthogonal to the facing direction and away from the elongated member.

## Description

### CROSS-REFERENCE TO RELATED APPLICATIONS

The present application claims the priority of Japanese Patent Application No. 2023-035317 and the priority of Japanese Patent Application No. 2023-035319, and the contents of Japanese Patent Application No. 2023-035317 and Japanese Patent Application No. 2023-035319 are incorporated herein by reference.

### TECHNICAL FIELD

The present invention relates to an energy storage apparatus including a plurality of energy storage devices.

### BACKGROUND ART

Conventionally, a battery module including a gas discharge duct has been known (see Patent Document 1). As shown in Fig. 40, a battery module 100 includes a battery cell stacked product 102 in which a plurality of prismatic battery cells 101 is layered and arranged. In the battery cell stacked product 102, the battery cell 101 is sandwiched and held by cell holders 103 from the outside in a stacked direction. A gas discharge duct 105 is attached to the upper side of the battery cell stacked product 102 in a cell height direction.

The battery cell 101 includes a flat prismatic metal battery case 1011 that hermetically accommodates an electrode group and an electrolyte solution therein, and the battery case 1011 includes a battery lid 1012. The battery lid 1012 forms one surface of the battery case 1011, and a gas release valve 1013 is provided at the center in a cell width direction.

The cell holder 103 is interposed between the plurality of battery cells 101 to hold the plurality of battery cells 101. The cell holder 103 is provided with duct locking portions 104 for locking the gas discharge duct 105.

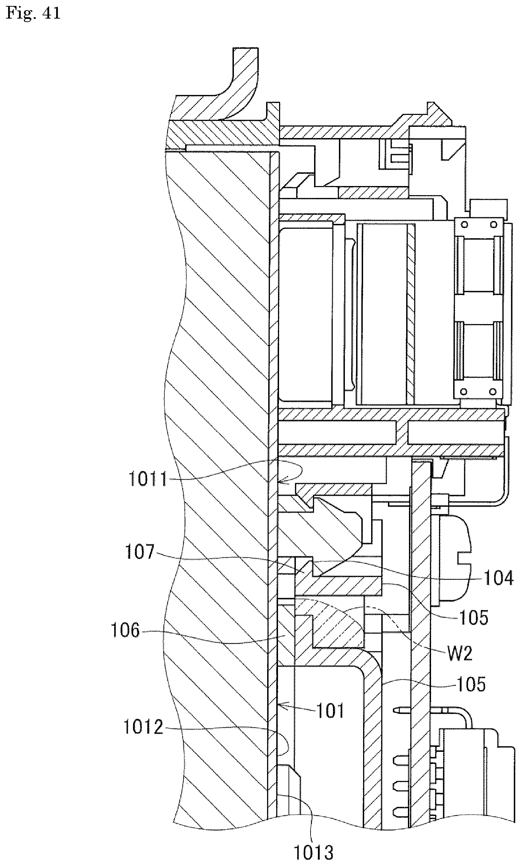

As also shown in Fig. 41, the duct locking portion 104 is provided so as to protrude upward from an upper end of the cell holder 103 in the cell height direction. The duct locking portions 104 are disposed at positions on both sides in the cell width direction with the gas release valve 1013 of the battery cell 101 interposed therebetween so as to be separated from each other and face each other. Each of the duct locking portions 104 has a hook shape protruding in a direction approaching each other toward the inner side in the cell width direction.

The gas discharge duct 105 is disposed so as to extend along the stacked direction of the battery cells 101. The gas discharge duct 105 is disposed at a central position of the battery cell stacked product 102 in the cell width direction and communicates with the gas release valve 1013 provided in the battery lid 1012 of the battery cell 101, and guides and discharges an exhaust gas discharged from the gas release valve 1013 to the outside of the battery module 100. The gas discharge duct 105 has a U-shaped cross section, and forms a closed cross section continuous in the stacked direction in cooperation with the battery lid 1012 of the battery cell 101.

The gas discharge duct 105 is provided with a sealing material 106 on a flange piece facing the battery lid 1012 of the battery cell 101, and is sealed so that gas does not leak from between the gas discharge duct and the battery lid 1012. The gas discharge duct 105 is provided with a cell holder locking portion 107 for locking to the cell holder 103.

The cell holder locking portion 107 is provided separately on one side and the other side in the cell width direction of the gas discharge duct 105, and is disposed at a position facing the duct locking portion 104 of the cell holder 103 corresponding to each cell holder 103. The cell holder locking portion 107 is locked to the duct locking portion 104 of the cell holder 103.

In the battery module 100 described above, at the time of assembly, the gas discharge duct 105 can be pressed against the cell holder 103 from the upper side in the cell height direction of the cell holder 103 to lock the cell holder locking portion 107 of the gas discharge duct 105 to the duct locking portion 104 of the cell holder 103.

### PRIOR ART DOCUMENT

### PATENT DOCUMENT

Patent Document 1: WO 2017/006763 A

### SUMMARY OF THE INVENTION

### PROBLEMS TO BE SOLVED BY THE INVENTION

In the battery module 100, the gas discharge duct 105 and the duct locking portion 104 are separated from each other. Therefore, when a large pressure is instantaneously applied to the gas discharge duct 105 at the time of opening the gas release valve 1013, the gas discharge duct 105 may rise, and the gas may leak from a gap between the gas discharge duct 105 and the sealing material 106. Therefore, the present inventors have attempted to solve the problem by bringing the duct locking portion 104 close to the gas discharge duct 105.

An object of an embodiment of one aspect of the present invention is to provide an energy storage apparatus in which positional displacement and deformation of a sandwiched member at the time of attaching a duct portion are suppressed.

### MEANS FOR SOLVING THE PROBLEMS

An energy storage apparatus according to an embodiment of one aspect of the present invention includes:
a plurality of energy storage devices including a gas release valve and arranged in a first direction;
a duct portion;
a sealing portion sandwiched between the plurality of energy storage devices and the duct portion; and
an adjacent member disposed between the energy storage devices adjacent to each other in the first direction, in which
the adjacent member includes
an adjacent member main body located between the energy storage devices, and
a locking piece, and
the locking piece includes
a locking piece main body extending from the adjacent member main body along the duct portion in a second direction that is a facing direction of the gas release valve and the duct portion, and
a locking portion extending, in an extending direction of the duct portion, from a position spaced apart from the adjacent member main body in the locking piece main body, or a locking portion extending in a direction orthogonal to the second direction and away from the duct portion.

An energy storage apparatus according to an embodiment of another aspect of the present invention includes:
a plurality of energy storage devices arranged in a first direction, the plurality of energy storage devices including a gas release valve disposed facing in a second direction orthogonal to the first direction;
an adjacent member disposed between the energy storage devices adjacent to each other in the first direction; and
a duct portion extending in the first direction in a state of overlapping the gas release valves of the plurality of energy storage devices in the second direction, the duct portion guiding gas discharged from the gas release valves, in which
the adjacent member includes
an adjacent member main body located between the energy storage devices adjacent to each other, and
a locking piece extending from the adjacent member main body along an end surface of the duct portion in a third direction orthogonal to the first direction and the second direction toward a direction away from the adjacent member main body in the second direction, the locking piece locking the duct portion,
the locking piece extends in the direction away from the adjacent member main body farther than a central portion of the end surface of the duct portion in the second direction, and
a portion of the locking piece is in contact with the end surface, the portion facing a section from an end edge position of the end surface of the duct portion closer to the adjacent member main body in the second direction to the central portion.

### BRIEF DESCRIPTION OF THE DRAWINGS

Fig. 1 is a perspective view of an energy storage apparatus according to a first embodiment.
Fig. 2 is an exploded perspective view of the energy storage apparatus.
Fig. 3 is a diagram of an apparatus main body included in the energy storage apparatus as viewed from one side in a Z-axis direction.
Fig. 4 is an enlarged view of an area indicated by IV in Fig. 3.
Fig. 5 is an exploded perspective view of the apparatus main body.
Fig. 6 is a perspective view of a first adjacent member included in the apparatus main body.
Fig. 7 is an enlarged view of a locking piece of the first adjacent member and a periphery thereof.
Fig. 8 is a perspective view of a second adjacent member included in the apparatus main body.
Fig. 9 is an enlarged view of a locking piece of the second adjacent member and a periphery thereof.
Fig. 10 is a diagram of a duct portion included in the energy storage apparatus as viewed in a Y-axis direction.
Fig. 11 is a diagram of the duct portion as viewed from the other side in the Z-axis direction.
Fig. 12 is a cross-sectional view taken along line XII-XII in Fig. 10.
Fig. 13 is a cross-sectional view taken along line XIII-XIII in Fig. 10.
Fig. 14 is a cross-sectional view taken along line XIV-XIV in Fig. 10.
Fig. 15 is a diagram for explaining how to attach the duct portion to the apparatus main body.
Fig. 16 is a diagram for explaining how to attach the duct portion to the apparatus main body.
Fig. 17 is a diagram for explaining how to attach the duct portion to the apparatus main body.
Fig. 18 is a perspective view of the apparatus main body to which the duct portion is attached.
Fig. 19 is an enlarged view of an area indicated by XVI in Fig. 18.
Fig. 20 is a perspective view of an energy storage apparatus according to a second embodiment.
Fig. 21 is a perspective view of an apparatus main body to which a duct portion is attached.
Fig. 22 is a diagram of the apparatus main body to which the duct portion is attached as viewed in the Y-axis direction.
Fig. 23 is an exploded perspective view of the energy storage apparatus.
Fig. 24 is an exploded perspective view of the apparatus main body.
Fig. 25 is a perspective view of a first adjacent member included in the apparatus main body.
Fig. 26 is an enlarged view of a first locking piece of the first adjacent member and a periphery thereof.
Fig. 27 is an enlarged view of the duct portion and a periphery thereof in a cross section taken along line XXVII-XXVII in Fig. 22.
Fig. 28 is a perspective view of a second adjacent member included in the apparatus main body.
Fig. 29 is an enlarged view of a second locking piece of the second adjacent member and a periphery thereof.
Fig. 30 is an enlarged view of the duct portion and a periphery thereof in a cross section taken along line XXX-XXX in Fig. 27.
Fig. 31 is a diagram of the duct portion as viewed in the Y-axis direction.
Fig. 32 is a diagram of the duct portion as viewed from the other side in the Z-axis direction.
Fig. 33 is a cross-sectional view taken along line XXXIII-XXXIII in Fig. 31.
Fig. 34 is a cross-sectional view taken along line XXXIV-XXXIV in Fig. 31.
Fig. 35 is a cross-sectional view taken along line XXXV-XXXV in Fig. 31.
Fig. 36 is a diagram for explaining how to attach the duct portion to the apparatus main body.
Fig. 37 is a diagram for explaining how to attach the duct portion to the apparatus main body.
Fig. 38 is a diagram for explaining how to attach the duct portion to the apparatus main body.
Fig. 39 is an enlarged view of an area indicated by XXXIX in Fig. 21.

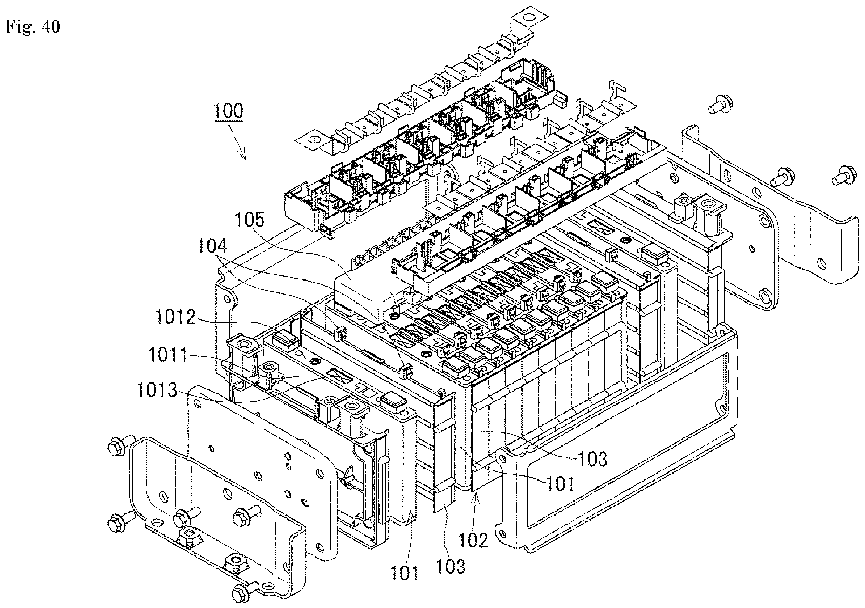

Fig. 40 is an exploded perspective view of a conventional battery module.
Fig. 41 is an enlarged cross-sectional view of an engagement portion between a gas discharge duct and a cell holder and a periphery thereof.

### MODE FOR CARRYING OUT THE INVENTION

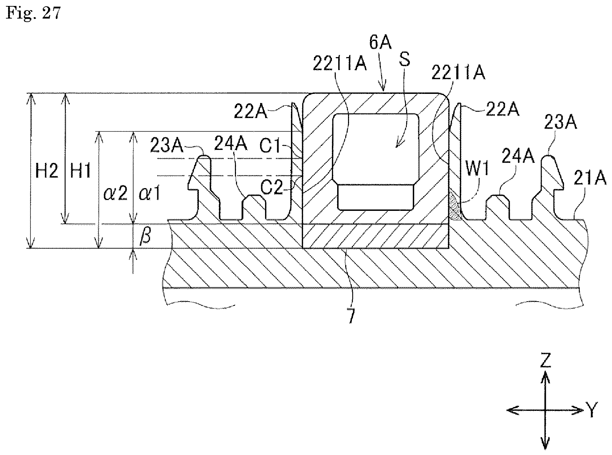

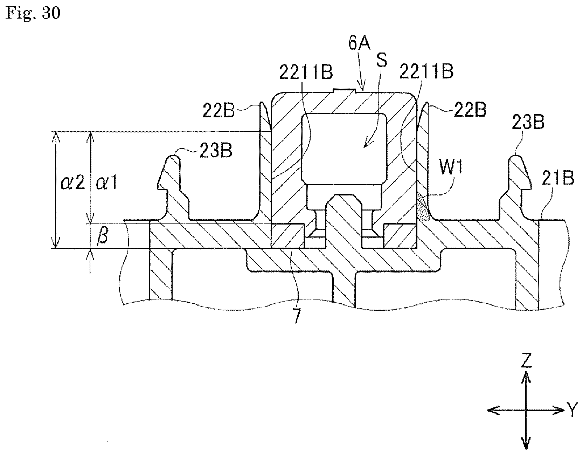

(1) An energy storage apparatus according to an embodiment of one aspect of the present invention includes:
   a plurality of energy storage devices including a gas release valve and arranged in a first direction;
   a duct portion;
   a sealing portion sandwiched between the plurality of energy storage devices and the duct portion; and
   an adjacent member disposed between the energy storage devices adjacent to each other in the first direction, in which
   the adjacent member includes
   an adjacent member main body located between the energy storage devices, and
   a locking piece, and
   the locking piece includes
   a locking piece main body extending from the adjacent member main body along the duct portion in a second direction that is a facing direction of the gas release valve and the duct portion, and
   a locking portion extending, in an extending direction of the duct portion, from a position spaced apart from the adjacent member main body in the locking piece main body, or a locking portion extending in a direction orthogonal to the second direction and away from the duct portion.
   According to the energy storage apparatus according to the embodiment of the present invention, when the sealing portion and the duct portion are pressed toward the plurality of energy storage devices (in the second direction) such that the sealing portion is located between the energy storage device and the duct portion, and the duct portion is locked to the adjacent member by engaging (hooking) the locking portion of the locking piece with (on) the duct portion, the locking portion extending from the locking piece main body extends in the extending direction of the duct portion, or extends in the direction orthogonal to the second direction and away from the duct portion, so that hooking on the sealing portion is suppressed, whereby the positional displacement and deformation of the sealing portion at the time of attaching the duct portion are suppressed.
(2) In the energy storage apparatus according to (1),
   the locking portion extending in the extending direction of the duct portion may extend from the locking piece main body to one side and the other side in the extending direction of the duct portion.
   As in the energy storage apparatus according to (2), since the locking portion extends from the locking piece main body to one side and the other side in the extending direction of the duct portion, the number of locking positions between the duct portion and the locking piece increases, whereby the duct portion is firmly locked to the adjacent member.
(3) In the energy storage apparatus according to (1) or (2),
   the duct portion may include
   a duct portion main body extending in the first direction, and
   a locked portion protruding from the duct portion main body in a direction orthogonal to the second direction and away from the duct portion main body and engaged with a locking portion extending in an extending direction of the duct portion, and
   the locked portion may include a locking inclined surface on which the locking portion extending in the extending direction of the duct portion abuts at an end portion on a side opposite to the plurality of energy storage devices in the second direction and which approaches the plurality of energy storage devices toward the duct portion main body in a protruding direction of the locked portion.
   In the energy storage apparatus according to (3), the locking portion abutting on (engaging with) the locking inclined surface is hardly displaced in the direction orthogonal to the second direction and away from the duct portion. That is, the locking piece is hardly detached from the locked portion.
(4) In the energy storage apparatus according to (1) or (2),
   the duct portion may include a duct portion main body extending in the first direction,
   the sealing portion may be disposed between the plurality of energy storage devices and the duct portion main body, and
   the locking piece main body may include, at a tip portion, a leading surface approaching the duct portion main body from a tip toward a base portion of the locking piece main body.
   As in the energy storage apparatus according to (4), when the sealing portion and the duct portion are pressed toward the plurality of energy storage devices (in the second direction) such that the sealing portion is located between the energy storage device and the duct portion main body, and the duct portion is locked to the adjacent member by engaging the locking portion of the locking piece with the elongated member, the duct portion main body is guided to a position (mounting position) along the locking piece by pressing the duct portion main body toward the energy storage device side along the leading surface, so that the duct portion is easily locked to the adjacent member.
(5) In the energy storage apparatus according to any one of (1) to (4),
   a base portion of the locking piece main body may be adjacent to the sealing portion in a third direction orthogonal to each of the first direction and the second direction.
   In the energy storage apparatus according to (5), since the base portion of the locking piece main body is adjacent to the sealing portion in the third direction, the movement and the deformation of the sealing portion in the direction toward the locking piece main body in the third direction is suppressed.
(6) An energy storage apparatus according to an embodiment of another aspect of the present invention includes:
   a plurality of energy storage devices arranged in a first direction, the plurality of energy storage devices each including a gas release valve disposed facing in a second direction orthogonal to the first direction;
   an adjacent member disposed between the energy storage devices adjacent to each other in the first direction; and
   a duct portion extending in the first direction in a state of overlapping the gas release valves of the plurality of energy storage devices in the second direction, the duct portion guiding gas discharged from the gas release valves, in which
   the adjacent member includes
   an adjacent member main body located between the energy storage devices adjacent to each other, and
   a locking piece extending, from the adjacent member main body along an end surface of the duct portion in a third direction orthogonal to each of the first direction and the second direction, toward a direction away from the adjacent member main body in the second direction, the locking piece locking the duct portion,
   the locking piece extends in the direction away from the adjacent member main body farther than a central portion of the end surface of the duct portion in the second direction, and
   a portion of the locking piece is in contact with the end surface, the portion facing a section from an end edge position of the end surface of the duct portion closer to the adjacent member main body in the second direction to the central portion.
   According to the energy storage apparatus according to the embodiment of another aspect of the present invention, in a case where dew condensation water is generated at an end portion close to a position where the gas release valves of the energy storage devices are disposed in a state where the energy storage apparatus is disposed such that the third direction is a vertical direction, even if the dew condensation water flows along a surface of the energy storage device in a direction approaching the duct portion and accumulates at a boundary portion between the duct portion and the plurality of energy storage devices or in the vicinity of the boundary portion (see Figs. 27 and 30), the duct portion and the locking piece are in contact with each other (a state where a gap is suppressed), so that the occurrence of conduction due to the dew condensation water or the like between the energy storage devices adjacent to each other with an adjacent member interposed therebetween is suppressed.
(7) The energy storage apparatus according to (6) may further include
   a sealing portion between the plurality of energy storage devices and the duct portion in the second direction, and
   a portion of the locking piece from a boundary position with the adjacent member main body in the second direction to a position facing a central portion of the end surface of the duct portion may be in contact with the sealing portion and the duct portion.
   As in the energy storage apparatus according to (7), the sealing portion is disposed between the plurality of energy storage devices and the duct portion so as to be in contact with the locking piece, so that gas leakage from between the plurality of energy storage devices and the duct portion can be suppressed while suppressing the occurrence of conduction due to dew condensation water or the like between the energy storage devices adjacent to each other with the adjacent member interposed therebetween.
(8) In the energy storage apparatus according to (6) or (7),
   the locking piece may include a locking piece main body extending from the adjacent member main body in a direction away from the adjacent member main body in the second direction, and a locking portion extending from the locking piece main body in the first direction, and
   the duct portion may include a locked convex part to which the locking portion is locked at a position adjacent to the locking piece main body in the extending direction of the locking portion in the first direction.

In the energy storage apparatus according to (8), it is possible to reduce the size (thickness) of the locking piece in the third direction.

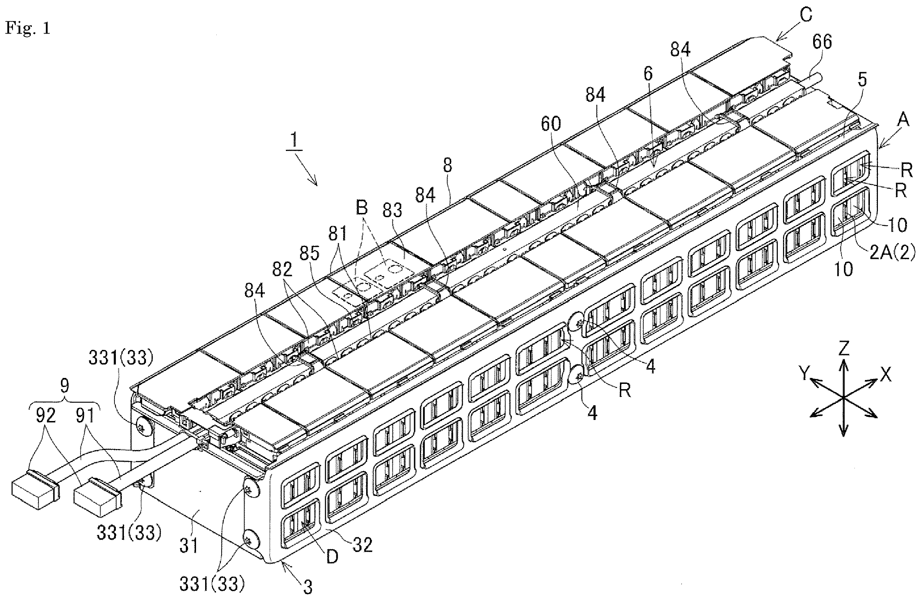

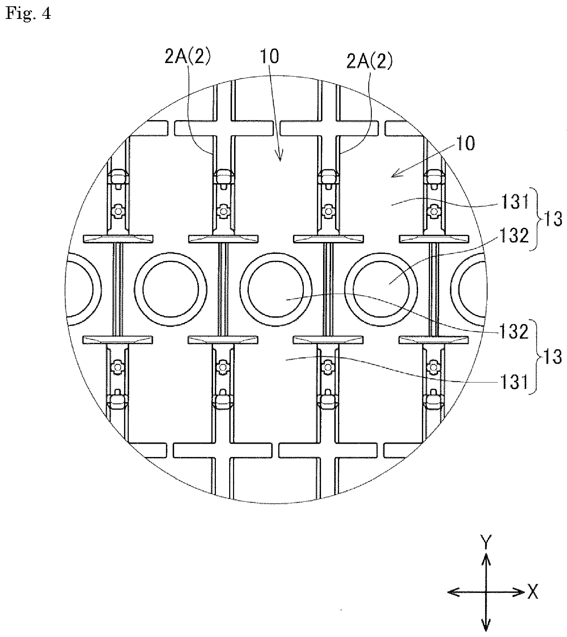

Hereinafter, an embodiment (hereinafter, referred to as a first embodiment) of one aspect of the present invention will be described with reference to Figs. 1 to 19. The names of the constituent members (constituent elements) of the embodiment are those in the embodiment, and may be different from the names of the constituent members (constituent elements) in the background art.

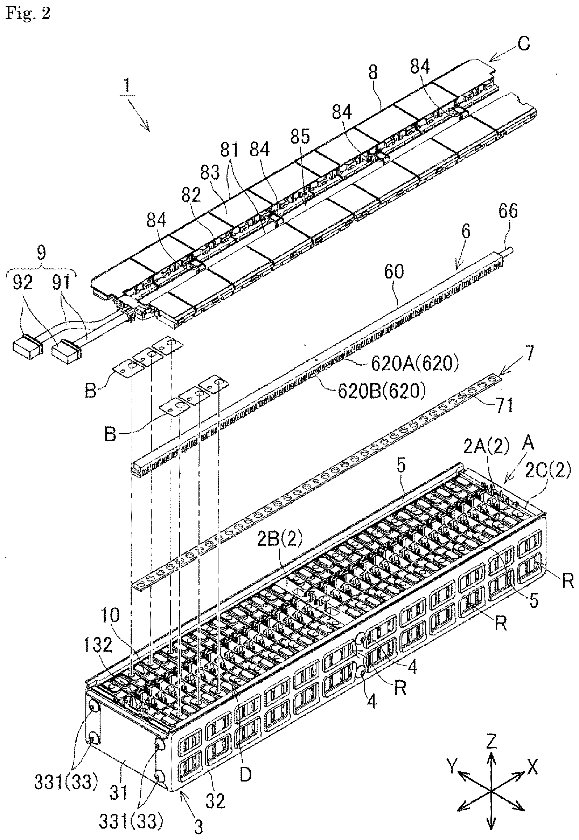

As shown in Figs. 1 and 2, an energy storage apparatus 1 of the embodiment includes: a plurality of energy storage devices 10 including a gas release valve 132 and arranged in a first direction; at least one adjacent member 2 disposed between the energy storage devices 10 adjacent to each other in the first direction; a duct portion 6 extending along the plurality of energy storage devices 10 so as to face the gas release valve 132 of the energy storage device 10; and a sealing portion 7 for suppressing gas leakage from between the plurality of energy storage devices 10 and the duct portion 6.

The energy storage apparatus 1 includes an apparatus main body A including the plurality of energy storage devices 10, the duct portion 6 attached to the apparatus main body A, and a plate portion C placed on a portion of the apparatus main body A where the duct portion 6 is attached. Hereinafter, the predetermined direction in which the energy storage devices 10 are arranged is defined as an X-axis direction (first direction) in an orthogonal coordinate system, a direction in which the apparatus main body A and the plate portion C are arranged is defined as a Z-axis direction (second direction) in the orthogonal coordinate system, and a direction orthogonal to each of the X-axis direction and the Z-axis direction is defined as a Y-axis direction (third direction) in the orthogonal coordinate system.

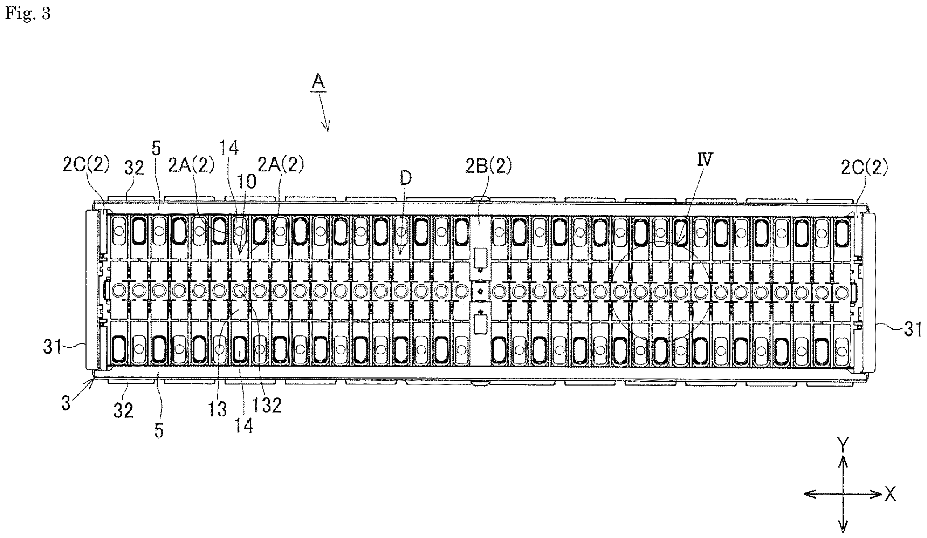

As also shown in Figs. 3 to 5, the apparatus main body A includes: a stacked product D in which the energy storage device 10 and the adjacent member 2 are alternately arranged in the X-axis direction; at least one bus bar B that makes the energy storage devices 10 conductive with each other in the stacked product D; and a holding portion 3 that holds the stacked product D. The apparatus main body A includes a first fixing portion 4 that fixes at least one adjacent member 2 to the holding portion 3, and an insulator 5 that insulates the stacked product D from the holding portion 3. In Fig. 2, in order to describe the configuration, some bus bars B of the plurality of bus bars B disposed in the plate portion C are illustrated outside the plate portion C.

The energy storage device 10 is a primary battery, a secondary battery, a capacitor, or the like. The energy storage device 10 of the embodiment is a nonaqueous electrolyte secondary battery that is chargeable/dischargeable. More specifically, the energy storage device 10 is a lithium ion secondary battery utilizing electron transfer caused by transfer of lithium ions.

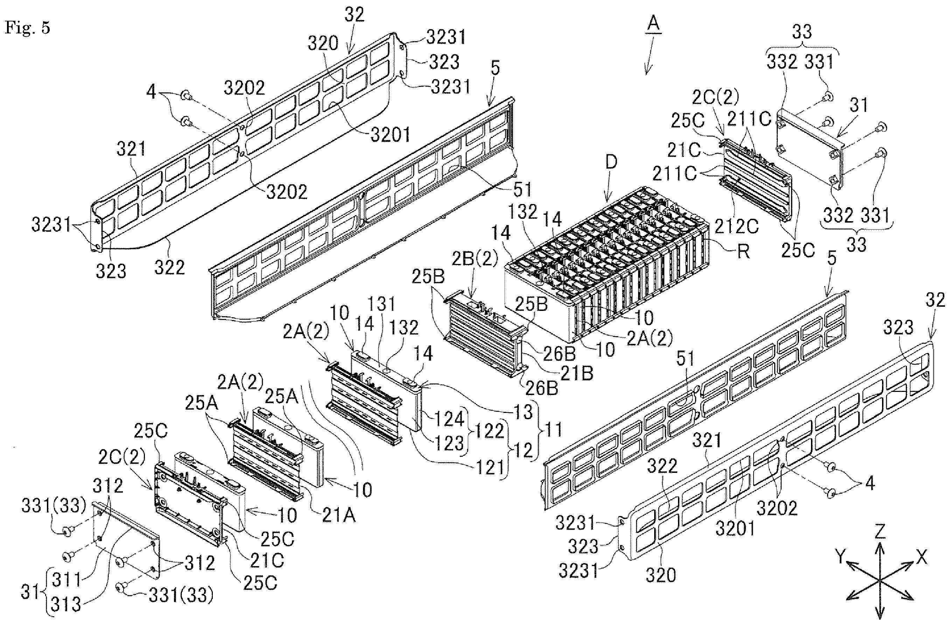

The energy storage device 10 includes: an electrode assembly; a case 11 that accommodates the electrode assembly together with an electrolyte solution; a terminal 14 at least a part of which is exposed to the outside of the case 11; and a current collector that connects the electrode assembly and the terminal 14 to each other. The energy storage device 10 of the embodiment includes a pair of terminals 14, and the pair of terminals 14 are disposed at an interval in the Y-axis direction at an end portion on one side (upper side in Fig. 5) in the Z-axis direction in the energy storage device 10.

In the electrode assembly, a positive electrode plate and a negative electrode plate are alternately layered with a separator interposed therebetween. In the electrode assembly, lithium ions move between the positive electrode plate and the negative electrode plate, whereby the energy storage device 10 is charged with and discharges electricity.

The case 11 includes a case main body 12 including an opening at an end portion on one side in the Z-axis direction, and a lid plate 13 having a plate shape and closing (shutting) the opening of the case main body 12. The case main body 12 has a rectangular tubular shape (bottomed rectangular tubular shape) in which an end portion on the other side (lower side in Fig. 5) in the Z-axis direction is closed, and the case 11 has a rectangular parallelepiped shape (hexahedral shape).

The case main body 12 includes a closed portion 121 having a plate shape and a body portion (peripheral wall) 122 having a tubular shape and extending from a peripheral edge of the closed portion 121.

The closed portion 121 is a portion located at a lower end of the case main body 12 when the case main body 12 is disposed in a posture in which the opening faces upward (the portion becoming a bottom wall of the case main body 12 when the opening faces upward). The closed portion 121 has a rectangular shape elongated in the Y-axis direction as viewed in the Z-axis direction.

The body portion 122 has a rectangular tubular shape, more specifically, a flat rectangular tubular shape. The body portion 122 includes a pair of long wall portions 123 extending from long sides of the peripheral edge of the closed portion 121 and a pair of short wall portions 124 extending from short sides of the peripheral edge of the closed portion 121. In the body portion 122, the short wall portions 124 connect end portions of the pair of long wall portions 123 facing each other in the X-axis direction, thereby forming the body portion 122 having a rectangular tubular shape.

The lid plate 13 is a plate-shaped member that closes the opening of the case main body 12. The lid plate 13 includes a lid plate main body 131 having a rectangular plate shape elongated in the Y-axis direction, and the gas release valve 132 disposed on the lid plate main body 131.

When pressure in the case 11 exceeds a predetermined value due to generation of gas in the case 11, the gas release valve 132 discharges the gas to the outside. The gas release valve 132 of the embodiment is disposed at a central portion of the lid plate main body 131 in the Y-axis direction. The gas release valve 132 of the embodiment has a circular shape as viewed in the Z-axis direction.

The lid plate 13 configured as described above is joined to the case main body 12 in a state where a peripheral edge portion of the lid plate 13 is placed on top of an opening peripheral edge portion of the case main body 12, whereby the case 11 is formed.

The pair of terminals 14 are portions that are electrically connected to the terminals 14 of another energy storage device 10, an external device, or the like. The terminal 14 is formed of a member having conductivity. The terminal 14 is formed of an aluminum-based metal material such as aluminum or an aluminum alloy, or a copper-based metal material such as copper or a copper alloy.

The pair of terminals 14 are disposed at both end portions of the lid plate 13 in the Y-axis direction. The pair of terminals 14 are disposed at positions on the lid plate 13 with the gas release valve 132 interposed therebetween.

The energy storage device 10 described above has a flat rectangular parallelepiped shape, and the plurality of energy storage devices 10 is arranged in the Z-axis direction in a state where wide surfaces (long wall portions 123) of the cases 11 face each other with the adjacent member 2 interposed therebetween. At this time, the gas release valves 132 of the energy storage devices 10 are arranged in a row in the X-axis direction (see Fig. 3). The terminals 14 on one side and the terminals 14 on the other side in the energy storage devices 10 are arranged in the X-axis direction at positions with the gas release valves 132 interposed therebetween.

The adjacent member 2 has an insulating property and is disposed between the plurality of energy storage devices 10 arranged in the X-axis direction or between the energy storage device 10 and a member (in the embodiment, a terminal portion 31 that is a part of the holding portion 3) arranged in the X-axis direction with respect to the energy storage device 10. The adjacent member 2 of the embodiment is formed of resin. The adjacent member 2 forms, between the adjacent member and the energy storage device 10 adjacent thereto, a flow channel R through which a temperature adjusting fluid (a gaseous body such as air in the example of the embodiment) can flow. The adjacent member 2 includes a plurality of types of adjacent members 2A, 2B, and 2C.

The adjacent member 2 includes the first adjacent member (adjacent member) 2A, the second adjacent member (adjacent member) 2B, and the third adjacent member 2C. The first adjacent member (adjacent member) 2A is disposed between two energy storage devices 10 adjacent to each other. The second adjacent member (adjacent member) 2B is disposed between two energy storage devices 10 adjacent to each other and is fixed to the holding portion 3. The third adjacent member 2C is disposed between the holding portion 3 and the energy storage device 10 disposed at an outermost end in the X-axis direction. The energy storage apparatus 1 may include, as the adjacent member 2, the first adjacent member 2A, the second adjacent member 2B, and the third adjacent member 2C. The energy storage apparatus 1 of the embodiment may include a plurality of first adjacent members 2A, one second adjacent member 2B, and two (a pair of) third adjacent members 2C. The plurality of first adjacent members 2A is disposed between the plurality of energy storage devices 10 except for a portion between the energy storage devices 10 where the second adjacent member 2B is disposed.

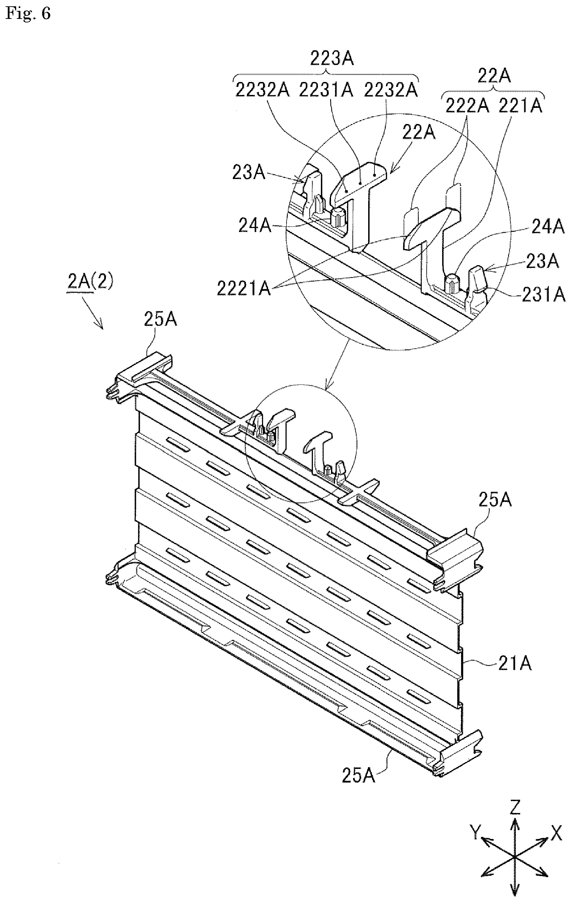

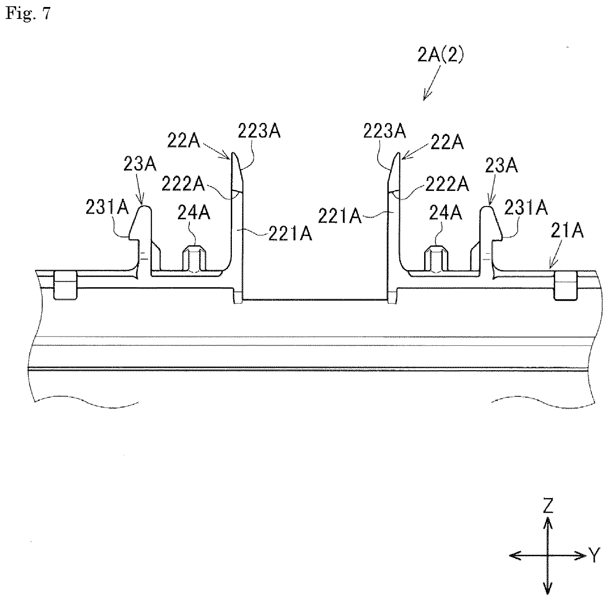

As also shown in Figs. 6 and 7, the plurality of first adjacent members 2A includes a first main body portion (adjacent member main body) 21A located between the energy storage devices 10 and at least one first locking piece (hereinafter, it may be simply referred to as a locking piece) 22A.

The first adjacent member 2A includes: the first main body portion 21A expanding in a plane direction orthogonal to the X-axis direction between the energy storage devices 10 adjacent to each other in the X-axis direction; and the first locking piece 22A extending (protruding) from the first main body portion 21A toward one side in the Z-axis direction. The first locking piece 22A locks the duct portion 6 to the first main body portion 21A. In the embodiment, locking or lock means that two portions abut on (contact) each other, whereby one portion suppresses the movement of the other portion. For example, the first locking piece 22A abuts on a locked portion 65 of the duct portion 6 so as to engage with the locked portion by hooking or the like, thereby fixing the duct portion 6.

The first adjacent member 2A includes: at least one first coupling portion 23A extending (protruding) from the first main body portion 21A toward one side in the Z-axis direction and coupling the plate portion C; at least one positioning convex part 24A extending (protruding) from the first main body portion 21A toward one side in the Z-axis direction and positioning the plate portion C; and at least one first restricting portion 25A restricting the movement of the energy storage device 10 adjacent to the first main body portion 21A with respect to the first main body portion 21A.

The first adjacent member 2A of the embodiment includes two (a pair of) first locking pieces 22A, two (a pair of) first coupling portions 23A, and two (a pair of) positioning convex parts 24A. The plurality of first adjacent members 2A forms at least one flow channel R through which the temperature adjusting fluid can flow between the first adjacent member and the energy storage device 10 adjacent thereto.

The first main body portion 21A is a portion that faces the energy storage device 10 in a state where a part of the first main body portion abuts on the long wall portion 123 of the case 11 of the energy storage device 10. The first main body portion 21A forms, in cooperation with the energy storage device 10 adjacent thereto, the flow channel R through which the temperature adjusting fluid can flow between the first main body portion and the energy storage device 10. The first main body portion 21A of the embodiment has a rectangular plate shape having a size that faces the entire surface of the long wall portion 123 of the case 11 of the energy storage device 10 as viewed in the X-axis direction, and has a rectangular corrugated cross section along an X-Z plane (a plane including the X-axis direction and the Z-axis direction).

The two first locking pieces 22A extend from positions spaced apart in the Y-axis direction at an end portion of the first main body portion 21A on one side in the Z-axis direction. The space between the two first locking pieces 22A in the Y-axis direction is substantially the same as a space between a pair of side wall portions 62 of the duct portion 6 in the Y-axis direction. The two first locking pieces 22A are plate-like (plate-like along the X-Z plane) with the Y-axis direction as a thickness direction.

The first locking piece 22A includes: a locking piece main body 221A extending in the Z-axis direction (facing direction of the gas release valve 132 and the duct portion 6) from the first main body portion 21A along the duct portion 6; and a locking portion 222A engaged with the duct portion 6 (specifically, a duct portion main body 60 to be described later: see Fig. 2). The two first locking pieces 22A include, at a tip portion, a leading surface 223A that approaches the duct portion 6 from a tip toward a base portion of the first locking piece 22A. In the locking piece main body 221A of the embodiment, the base portion is a boundary portion between the first locking piece 22A and the first main body portion 21A. In other words, it is a portion of the locking piece main body 221A on the most other side in the Z-axis direction.

The locking piece main body 221A is a band plate-like portion extending straight from the first main body portion 21A in the Z-axis direction.

The locking portion 222A is a portion extending in the X-axis direction (extending direction of the duct portion 6) from a position of the locking piece main body 221A spaced apart from the first main body portion 21A on one side in the Z-axis direction. The locking portion 222A of the embodiment extends from the locking piece main body 221A to one side and the other side in the X-axis direction. The first locking piece 22A includes two locking portions 222A. The locking portion 222A includes an inclined portion 2221A that separates from the locking piece main body 221A from the tip of the first locking piece 22A toward the first main body portion 21A as viewed in the Y-axis direction.

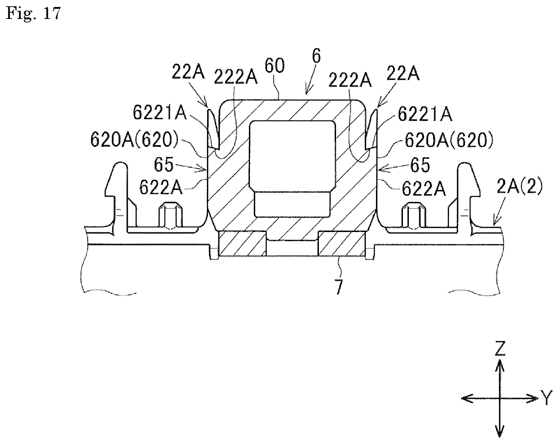

The leading surface 223A is formed in an area extending over the locking piece main body 221A and the two locking portions 222A. The locking piece main body 221A includes a first leading surface 2231A, and the two locking portions 222A include second leading surfaces 2232A. The first leading surface 2231A and the second leading surfaces 2232A are connected to form one flat inclined surface (leading surface) 223A. The locking piece main body 221A of the embodiment includes the first leading surface 2231A at a tip portion. In the locking piece main body 221A of the embodiment, the tip portion is a portion where the locking portion 222A is provided. In other words, the tip portion of the locking piece main body 221A is an area from a position of the locking piece main body 221A farthest from the first main body portion 21A to an end portion of the locked portion 65 (see Fig. 17) on a side (one side in the Z-axis direction) opposite to the energy storage device 10 in the Z-axis direction.

The two first coupling portions 23A extend from positions spaced apart in the Y-axis direction at the end portion of the first main body portion 21A on one side in the Z-axis direction. The two first coupling portions 23A are disposed at an interval in the Y-axis direction in a state where the two first locking pieces 22A are located between the two first coupling portions. The first coupling portion 23A and the first locking piece 22A are disposed at a predetermined interval in the Y-axis direction. The two first coupling portions 23A include, at tips, a hook portion 231A whose dimension in the Y-axis direction increases toward the outside toward the first main body portion 21A as viewed in the X-axis direction. The hook portion 231A is hooked on a predetermined portion of the plate portion C, and the plate portion C is locked.

The two positioning convex parts 24A extend from positions spaced apart in the Y-axis direction at the end portion of the first main body portion 21A on one side in the Z-axis direction. The positioning convex part 24A is disposed between the first locking piece 22A and the first coupling portion 23A corresponding to the first locking piece 22A. The positioning convex part 24A is inserted into the corresponding hole of the plate portion C to position the plate portion C with respect to the apparatus main body A.

The first restricting portion 25A extends in the X-axis direction from a corner portion of the first main body portion 21A having a rectangular shape, and abuts on the energy storage device 10 (specifically, the case 11) adjacent to the first main body portion 21A from the outside in a Y-Z plane direction, thereby restricting the relative movement of the energy storage device 10 in the Y-Z plane direction with respect to the first main body portion 21A. The first restricting portion 25A of the embodiment extends from the first main body portion 21A toward each of one side and the other side in the X-axis direction.

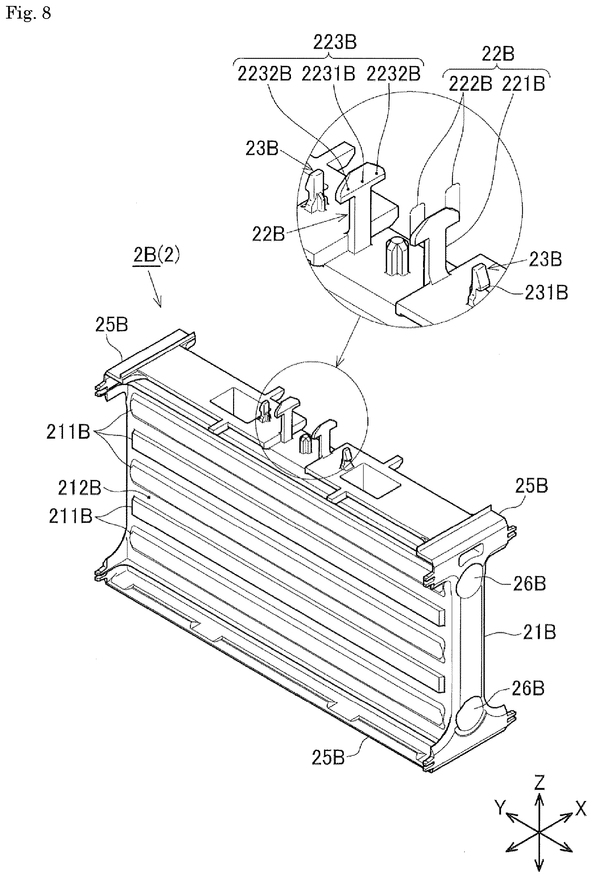

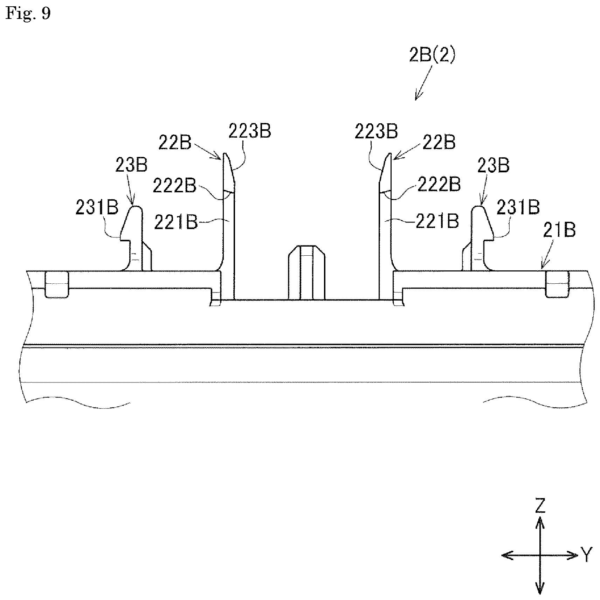

As also shown in Figs. 8 and 9, the second adjacent member 2B includes a second main body portion (adjacent member main body) 21B located between the energy storage devices 10 adjacent to each other and a second locking piece (hereinafter, it may be simply referred to as a locking piece) 22B.

The second adjacent member 2B includes: the second main body portion 21B expanding in a plane direction orthogonal to the X-axis direction between the energy storage devices 10 adjacent to each other in the X-axis direction; and the second locking piece 22B extending (protruding) from the second main body portion 21B toward one side in the Z-axis direction and locking the duct portion 6. The second adjacent member 2B includes: a second coupling portion 23B extending (protruding) from the second main body portion 21B toward one side in the Z-axis direction and coupling the plate portion C; a second restricting portion 25B restricting the movement of the energy storage device 10 adjacent to the second main body portion 21B with respect to the second main body portion 21B; and a second fixing portion 26B used for fixing second the adjacent member 2B to the holding portion 3.

The second adjacent member 2B of the embodiment includes two (a pair of) second locking pieces 22B and two (a pair of) second coupling portions 23B. The second adjacent member 2B forms at least one flow channel R through which the temperature adjusting fluid can flow between the second adjacent member and the energy storage device 10 adjacent thereto.

The second main body portion 21B is a portion that faces the long wall portion 123 of the case 11 of the energy storage device 10 in a state where a part of the second main body portion abuts on the long wall portion. The second main body portion 21B forms, in cooperation with the energy storage device 10 adjacent thereto, the flow channel R through which the temperature adjusting fluid can flow between the second main body portion and the energy storage device 10. The dimension of the second main body portion 21B in the X-axis direction is larger (thicker) than the dimension of the first main body portion 21A in the X-axis direction. The second main body portion 21B of the embodiment has a rectangular plate shape having a size that faces the entire surface of the long wall portion 123 of the case 11 of the energy storage device 10 as viewed in the X-axis direction. The second main body portion 21B includes a plurality of convex strips 211B extending in the Y-axis direction and arranged at intervals in the Z-axis direction. The plurality of convex strips 211B protrudes from a facing surface 212B of the second main body portion 21B facing the energy storage device 10.

The two second locking pieces 22B extend from positions spaced apart in the Y-axis direction at an end portion of the second main body portion 21B on one side in the Z-axis direction. The space between the two second locking pieces 22B in the Y-axis direction is substantially the same as the space between the pair of side wall portions 62 of the duct portion 6 in the Y-axis direction, similarly to the two first locking pieces 22A of the first adjacent member 2A. The configuration of the second locking piece 22B is the same as the configuration of the first locking piece 22A. The second locking piece 22B includes a locking piece main body 221B and a locking portion 222B. The second locking piece 22B includes, at a tip portion, a leading surface 223B (first leading surface 2231B and second leading surface 2232B) that approaches the duct portion 6 from a tip toward a base portion of the second locking piece 22B. The locking piece main body 221B of the embodiment includes the first leading surface 2231B at a tip portion. In the locking piece main body 221B of the embodiment, the tip portion is a portion where the locking portion 222B is provided. In other words, the tip portion of the locking piece main body 221B is an area from a position of the locking piece main body 221B farthest from the second main body portion 21B to the end portion of the locked portion 65 on the side opposite to the energy storage device 10 in the Z-axis direction. In the locking piece main body 221B of the embodiment, the base portion is a boundary portion between the second locking piece 22B and the second main body portion 21B. In other words, it is a portion of the locking piece main body 221B on the most other side in the Z-axis direction.

The two second coupling portions 23B extend from positions spaced apart in the Y-axis direction at the end portion of the second main body portion 21B on one side in the Z-axis direction. Similarly to the two first coupling portions 23A of the first adjacent member 2A, the two second coupling portions 23B are disposed at an interval in the Y-axis direction in a state where the two second locking pieces 22B are located therebetween. The configuration of the second coupling portion 23B is the same as the configuration of the first coupling portion 23A. The second coupling portion 23B includes a hook portion 231B at a tip.

The second restricting portion 25B extends in the X-axis direction from a corner portion of the second main body portion 21B having a rectangular shape, and abuts on the energy storage device 10 (specifically, the case 11) adjacent to the second main body portion 21B from the outside in the Y-Z plane direction, thereby restricting the relative movement of the energy storage device 10 in the Y-Z plane direction with respect to the second main body portion 21B. The second restricting portion 25B of the embodiment extends from the second main body portion 21B toward each of one side and the other side in the X-axis direction.

The second fixing portion 26B is disposed at an end portion of the second main body portion 21B in the Y-axis direction. The second fixing portion 26B fixes the second adjacent member 2B to the holding portion 3 by engaging with the first fixing portion 4. The second fixing portion 26B of the embodiment is an insert nut. The first fixing portion 4 of the embodiment is a bolt. The first fixing portion 4 is screwed with the second fixing portion 26B in a state where the holding portion 3 is inserted, to fix the second adjacent member 2B to the holding portion 3.

The two third adjacent members 2C include: a third main body portion 21C expanding in a plane direction orthogonal to the X-axis direction between the energy storage device 10 adjacent to the third adjacent member in the X-axis direction and the terminal portion 31 that is a part of the holding portion 3; and a third restricting portion 25C restricting the movement of the energy storage device 10 adjacent to the third main body portion 21C with respect to the third main body portion 21C (see Fig. 5). The two third adjacent members 2C form at least one flow channel R through which the temperature regulating fluid can flow between the third adjacent member and the energy storage device 10 adjacent thereto.

The third main body portion 21C is a portion that faces the energy storage device 10 in a state where a part of the third main body portion abuts on the long wall portion 123 of the energy storage device 10. Similarly to the first main body portion 21A of the first adjacent member 2A and the second main body portion 21B of the second adjacent member 2B, the third main body portion 21C also forms, in cooperation with the energy storage device 10 adjacent thereto, the flow channel R through which the temperature adjusting fluid can flow between the third main body portion and the energy storage device 10. The third main body portion 21C of the embodiment has a rectangular plate shape having a size that faces the entire surface of the long wall portion 123 of the case 11 of the energy storage device 10 as viewed in the X-axis direction. The third main body portion 21C includes a plurality of convex strips 211C extending in the Y-axis direction and arranged at intervals in the Z-axis direction. The plurality of convex strips 211C protrudes from a facing surface 212C of the third main body portion 21C facing the energy storage device 10.

The third restricting portion 25C extends in the X-axis direction from a corner portion of the third main body portion 21C having a rectangular shape, and abuts on the energy storage device 10 (specifically, the case 11) adjacent to the third main body portion 21C from the outside in the Y-Z plane direction, thereby restricting the relative movement of the energy storage device 10 in the Y-Z plane direction with respect to the third main body portion 21C. The third restricting portion 25C of the embodiment extends from the third main body portion 21C in a direction toward the energy storage device 10 in the X-axis direction.

As shown in Figs. 1 to 3 and 5, the holding portion 3 holds the stacked product D by surrounding the periphery of the stacked product D. The holding portion 3 collectively holds the plurality of energy storage devices 10 and the plurality of adjacent members 2 by surrounding the peripheries of the plurality of energy storage devices 10 and the plurality of adjacent members 2. The holding portion 3 is made of metal, resin, or the like.

The holding portion 3 includes: a pair of terminal portions 31 disposed on both sides of the stacked product D in the X-axis direction; an extending portion 32 extending in the X-axis direction along the stacked product D at a position aligned with the stacked product D in the Y-axis direction; and a joining portion 33 joining the terminal portion 31 with the extending portion 32. The holding portion 3 of the embodiment includes a pair of extending portions 32 arranged at an interval in the Y-axis direction such that the stacked product D is located between the pair of extending portions.

The pair of terminal portions 31 are disposed so as to sandwich the third adjacent member 2C between the terminal portion and the energy storage device 10 disposed at an end in the X-axis direction. The terminal portion 31 includes: a terminal portion main body 311 expanding in the Y-Z plane direction; and a flange portion 313 extending from the terminal portion main body 311 in a direction away from the energy storage device 10 in the X-axis direction.

The terminal portion main body 311 has a rectangular shape having a size equal to that of the energy storage device 10 as viewed in the X-axis direction. Specifically, the terminal portion main body 311 has a rectangular shape elongated in the Y-axis direction, and includes a plurality of through-holes 312 disposed at intervals in the Z-axis direction at both end portions in the Y-axis direction (see Fig. 5). The flange portion 313 extends in the X-axis direction and in the Y-axis direction from an end portion of the terminal portion main body 311 on one side in the Z-axis direction.

The pair of extending portions 32 include: an extending portion main body 320 facing the short wall portion 124 of the energy storage device 10; a first piece portion 321 extending in the Y-axis direction along the lid plate 13 of the energy storage device 10 from an end portion of the extending portion main body 320 on one side in the Z-axis direction and extending in the X-axis direction; a second piece portion 322 extending in the Y-axis direction along the closed portion 121 of the energy storage device 10 from an end portion of the extending portion main body 320 on the other side in the Z-axis direction and extending in the X-axis direction; and a pair of third piece portions 323 extending in the Y-axis direction along the terminal portion 31 from an end portion of the extending portion main body 320 in the X-axis direction and extending in the Z-axis direction.

The extending portion main body 320 is a plate-like portion expanding along the short wall portions 124 of the plurality of energy storage devices 10. The extending portion main body 320 includes a plurality of ventilation ports 3201 and a plurality of first fixing holes 3202. The ventilation port 3201 is a hole that penetrates in the Y-axis direction so that the temperature adjusting fluid can flow into or out of the flow channel R. The first fixing hole 3202 is a hole that penetrates in the Y-axis direction at a position facing the second fixing portion 26B of the second adjacent member 2B. The first fixing portion 4 is inserted into the first fixing hole 3202.

The first piece portion 321 is a belt-shaped portion elongated in the X-axis direction, and the second piece portion 322 is also a belt-shaped portion elongated in the X-axis direction. A width (dimension in the Y-axis direction) of a portion of the second piece portion 322 except for both end portions in the X-axis direction is larger than a width of the first piece portion 321. The pair of third piece portions 323 include a plurality of second fixing holes 3231 disposed at intervals in the Z-axis direction. The second fixing hole 3231 is disposed at a position facing the through-hole 312 of the terminal portion 31.

A plurality of the joining portions 33 fixes the terminal portion 31 to the extending portion 32 in a state where the joining portions are inserted through the through-hole 312 of the terminal portion 31 and the second fixing hole 3231 of the extending portion 32 (specifically, the third piece portion 323). The joining portion 33 of the embodiment includes a bolt 331 and a nut 332.

The insulator 5 has an insulating property. The insulator 5 is disposed between the extending portion 32 and the stacked product D. The energy storage apparatus 1 includes a pair of insulators 5. The insulator 5 covers a region of the extending portion 32 facing the plurality of energy storage devices 10. With such a configuration, the insulator 5 provides insulation between the extending portion 32 and the plurality of energy storage devices 10. A ventilation region 51 having a size and shape equal to those of the ventilation port 3201 is provided at a position facing the ventilation port 3201 of the extending portion main body 320 in the insulator 5.

The sealing portion 7 is a portion or a member that is disposed between the apparatus main body A and the duct portion 6 and suppresses gas leakage from between the apparatus main body A and the duct portion 6, and extends in the X-axis direction at a position facing the gas release valve 132 in the Y-axis direction as shown in Fig. 2. The sealing portion 7 of the embodiment is formed of a foam such as fluorine-based, silicon-based, or urethane-based resin, and seals (hermetically seals) between the apparatus main body A and the duct portion 6.

The sealing portion 7 is a belt-shaped member whose width direction is the Y-axis direction and whose longitudinal direction is the X-axis direction. The sealing portion 7 includes a sealing portion through-hole 71 at a position facing the gas release valve 132 of the energy storage device 10 (a position overlapping the gas release valve 132 as viewed in the Z-axis direction: see Fig. 3). The sealing portion 7 includes a plurality of sealing portion through-holes 71. The plurality of sealing portion through-holes 71 is arranged in a row at intervals in the X-axis direction in the sealing portion 7.

A width (dimension in the Y-axis direction) of the sealing portion 7 of the embodiment is equal to that of the duct portion 6. The shape of the sealing portion through-hole 71 as viewed in the Z-axis direction is preferably similar to that of the gas release valve 132, and more preferably the same shape. The size of the sealing portion communication hole 71 as viewed in the Z-axis direction is preferably about the same as that of the gas release valve 132. The sealing portion through-hole 71 of the embodiment is a circular hole having the same or substantially the same diameter as the diameter of the gas release valve 132.

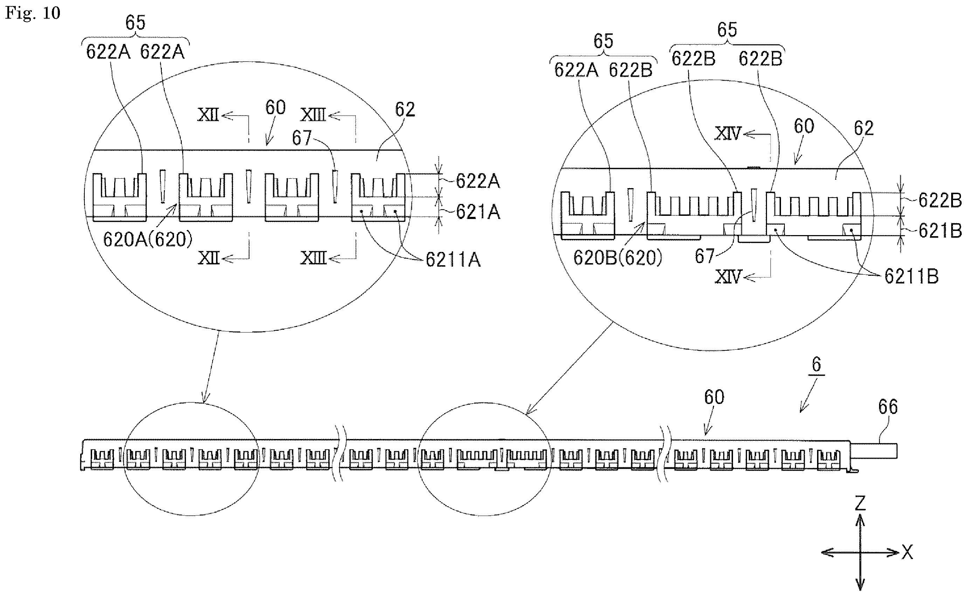

As shown in Figs. 1, 2, and 10 to 14, the duct portion 6 includes the duct portion main body 60 that guides gas discharged from the gas release valve 132 of the energy storage device 10, and the locked portions 65 engaged with the locking portions 222A and 222B of the locking pieces 22A and 22B of the adjacent member 2 (see Fig. 10). The duct portion 6 includes a joint portion 66 to which another member is connected and from which gas in the duct portion main body 60 can be released. The duct portion 6 of the embodiment is formed of resin such as polybutylene terephthalate or a glass fiber blended resin (polybutylene terephthalateglass fiber).

The duct portion main body 60 is a hollow tubular portion extending in the X-axis direction and including a guide space S therein. The duct portion main body 60 of the embodiment extends from an end portion of the apparatus main body A on one side (left side in Fig. 1) to an end portion thereof on the other side (right side in Fig. 1) in the X-axis direction, and an end portion of the duct portion main body on one side is closed. The duct portion main body 60 is disposed at a position overlapping the gas release valve 132 of the energy storage device 10 in the apparatus main body A as viewed in the Z-axis direction (see Fig. 3).

The duct portion main body 60 includes: a bottom wall portion 61 facing the apparatus main body A; a pair of side wall portions 62 extending from both ends of the bottom wall portion 61 in the Y-axis direction to one side in the Z-axis direction; and a top wall portion 63 connecting end portions of the pair of side wall portions 62 on one side in the Z-axis direction. A space surrounded by the bottom wall portion 61, the pair of side wall portions 62, and the top wall portion 63 forms the guide space S capable of guiding the gas discharged from the gas release valve 132 to the joint portion 66.

The bottom wall portion 61 is a belt-shaped portion whose width direction is the Y-axis direction and whose longitudinal direction is the X-axis direction, and is a portion that sandwiches the sealing portion 7 between the bottom wall portion and the apparatus main body A in the duct portion main body 60. The bottom wall portion 61 includes a duct portion through-hole 611 that allows the sealing portion through-hole 71 and the guide space S to communicate with each other at a position facing the sealing portion through-hole 71 of the sealing portion 7 in the Z-axis direction (a position facing the gas release valve 132 of the energy storage device 10 in the Z-axis direction). The bottom wall portion 61 includes a plurality of duct portion through-holes 611. The plurality of duct portion through-holes 611 is arranged in a row at intervals in the X-axis direction in the bottom wall portion 61.

The side wall portion 62 includes a plurality of convex parts 620 protruding outward in the Y-axis direction and arranged at intervals in the X-axis direction. The side wall portion 62 includes a plurality of ribs 67 each disposed between the convex parts 620 adjacent to each other.

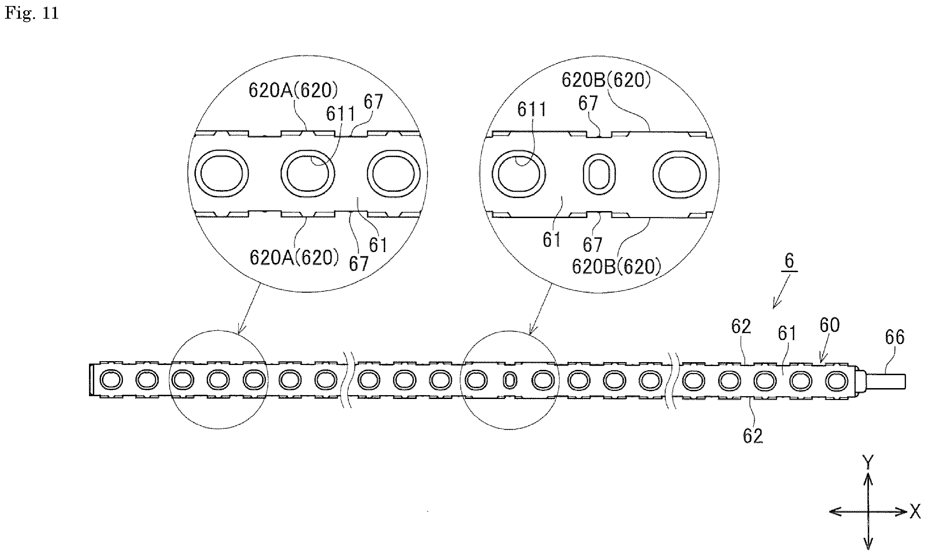

The convex part 620 is disposed at a position facing, in the Y-axis direction, the position of the duct portion through-hole 611 in the X-axis direction. The plurality of convex parts 620 of the embodiment includes a plurality of first convex parts 620A having a dimension in the X-axis direction equal to that of the duct portion through-hole 611, and two second convex parts 620B having a dimension in the X-axis direction larger than that of the first convex part 620A (see Fig. 11). In the duct portion 6, a part of the convex part 620 forms the locked portion 65.

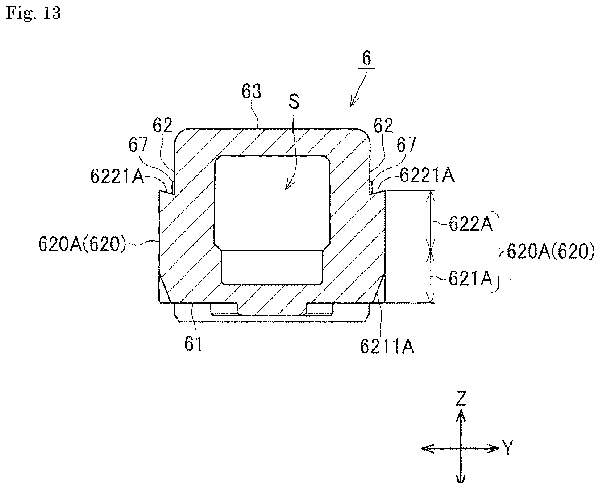

The first convex part 620A includes a first portion 621A disposed at an end portion of the side wall portion 62 on the other side in the Z-axis direction, and a pair of second portions 622A extending from both end portions of the first portion 621A in the X-axis direction to one side in the Z-axis direction (see Figs. 10 and 13).

The first portion 621A is a portion having a rectangular shape as viewed in the Y-axis direction. The first portion 621A of the embodiment includes, at both end portions in the X-axis direction, inclined surfaces 6211A that approach the inner side in the Y-axis direction (the central side of the duct portion 6 in the Y-axis direction) toward the other side in the Z-axis direction.

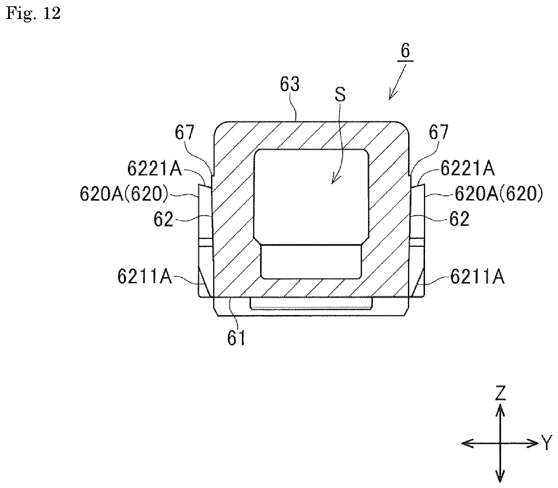

The pair of second portions 622A are portions extending straight toward one side in the Z-axis direction. An end surface 6221A of the second portion 622A on one side in the Z-axis direction includes a locking inclined surface 6221A that approaches the other side in the Z-axis direction (approaches the apparatus main body A) toward the side wall portion 62 (see Figs. 12 and 13). The locking inclined surface 6221A is a surface on which the locking portions 222A and 222B of the locking pieces 22A and 22B abut at an end portion of the second portion 622A on one side in the Z-axis direction (see Fig. 17).

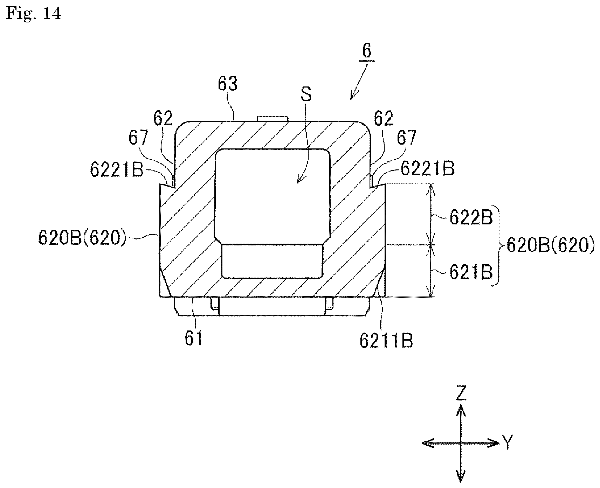

Similarly to the first convex part 620A, the second convex part 620B includes a first portion 621B disposed at an end portion of the side wall portion 62 on the other side in the Z-axis direction, and a pair of second portions 622B extending from both end portions of the first portion 621B in the X-axis direction to one side in the Z-axis direction (see Figs. 10 and 14).

The first portion 621B is a portion having a larger dimension in the X-axis direction than the first portion 621A of the first convex part 620A and having a rectangular shape as viewed in the Y-axis direction. Similarly to the first portion 621A of the first convex part 620A, the first portion 621B includes, at both end portions in the X-axis direction, inclined surfaces 6211B that approach the inner side in the Y-axis direction toward the other side in the Z-axis direction.

The pair of second portions 622B have the same configuration as the second portion 622A of the first convex part 620A. The pair of second portions 622B are portions extending straight toward one side in the Z-axis direction. An end surface 6221B of the second portion 622B on one side in the Z-axis direction includes a locking inclined surface 6221B that approaches the other side in the Z-axis direction (approaches the apparatus main body A) toward the side wall portion 62. The locking inclined surface 6221B is a surface on which the locking portions 222A and 222B of the locking pieces 22A and 22B abut at an end portion of the second portion 622B on one side in the Z-axis direction.

The second convex part 620B is disposed at a position facing, in the Y-axis direction, the duct portion through-hole 611 facing, in the Z-axis direction, the gas release valves 132 of the two energy storage devices 10 adjacent to the second adjacent member 2B. Two second convex parts 620B are disposed at a central portion in the X-axis direction in the side wall portion 62 on one side in the Y-axis direction, and two second convex parts are disposed at a central portion in the X-axis direction in the side wall portion 62 on the other side in the Y-axis direction. In the duct portion 6, the first convex part 620A is disposed at a position facing, in the Y-axis direction, the duct portion through-hole 611 facing, in the Z-axis direction, the gas release valves 132 of the plurality of energy storage devices 10 except for the two energy storage devices 10 adjacent to the second adjacent member 2B.

In the duct portion 6 of the embodiment, in the plurality of convex parts 620 (the first convex part 620A and the second convex part 620B) configured as described above, the locked portion 65 of the duct portion 6 is configured by the facing second portions 622A of the two first convex parts 620A adjacent to each other in the X-axis direction, the facing second portions 622B of the two second convex parts 620B adjacent to each other in the X-axis direction, or the facing second portion 622A and second portion 622B of the first convex part 620A and the second convex part 620B adjacent to each other in the X-axis direction. The locked portion 65 of the embodiment is configured by the two second portions 622A and 622B facing each other at an interval in the X-axis direction (see Fig. 10).

The rib 67 is disposed between the convex parts 620 adjacent to each other in the X-axis direction in the side wall portion 62. The rib 67 of the embodiment is disposed at an intermediate position between the convex parts 620 adjacent to each other in the X-axis direction in the side wall portion 62. The rib 67 protrudes in the Y-axis direction and extends in the Z-axis direction. A protruding amount of the rib 67 in the Y-axis direction is smaller than a protruding amount of the convex part 620 in the Y-axis direction (see Figs. 12 to 14).

The joint portion 66 is a portion extending in the X-axis direction from an end portion of the duct portion main body 60 on the other side in the X-axis direction. The joint portion 66 of the embodiment has a tubular shape that allows the guide space S and an external space to communicate with each other.

The duct portion 6 described above is attached to the apparatus main body A as follows.

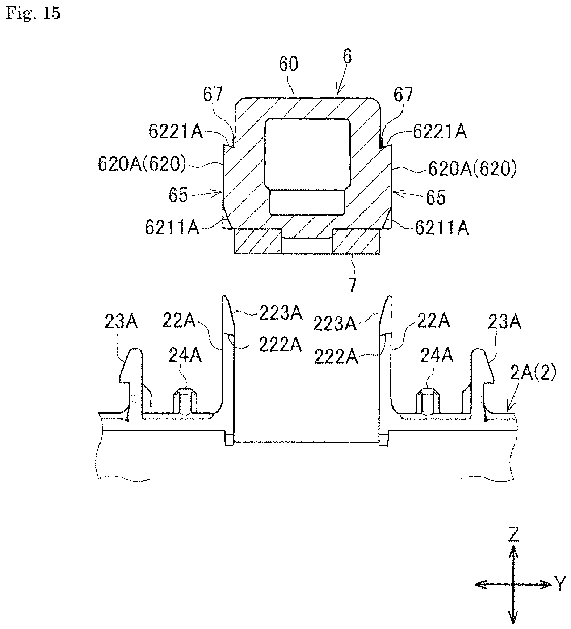

First, the duct portion 6 is pressed toward the other side in the Z-axis direction toward the mounting position of the apparatus main body A in a state where the sealing portion 7 is located between the duct portion and the apparatus main body A (see Fig. 15).

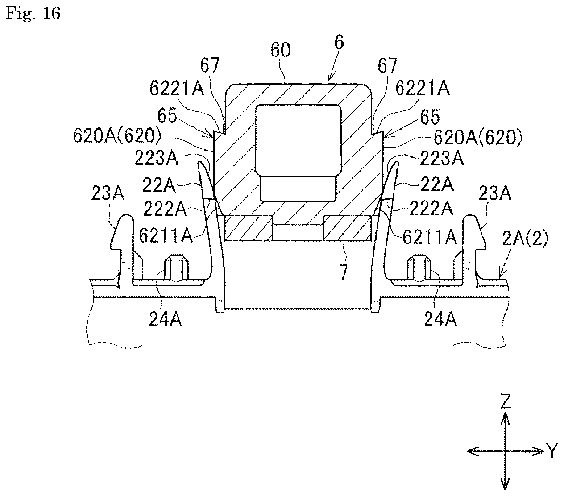

Subsequently, the inclined surfaces 6211A and 6211B of the convex part 620 (specifically, the first portions 621A and 621B) of the duct portion 6 abut on the leading surfaces 223A and 223B of the pair of first locking pieces 22A and the pair of second locking pieces 22B of the adjacent members 2A and 2B. When the duct portion 6 is further pressed toward the apparatus main body A side, the pair of first locking pieces 22A and the pair of second locking pieces 22B bend such that distances between the tip portions of the pair of first locking pieces 22A and the pair of second locking pieces 22B increase (see Fig. 16).

When the duct portion 6 is further pressed toward the apparatus main body A side, the locking portions 222A and 222B of the pair of first locking pieces 22A and the pair of second locking pieces 22B pass through the locked portion 65 (the second portions 622A and 622B) to eliminate the bending, and the locking portions 222A and 222B abut on the locking inclined surfaces 6221A and 6221B to engage with the locked portion 65 (the second portions 622A and 622B) (in the embodiment, they are hooked: see Fig. 17).

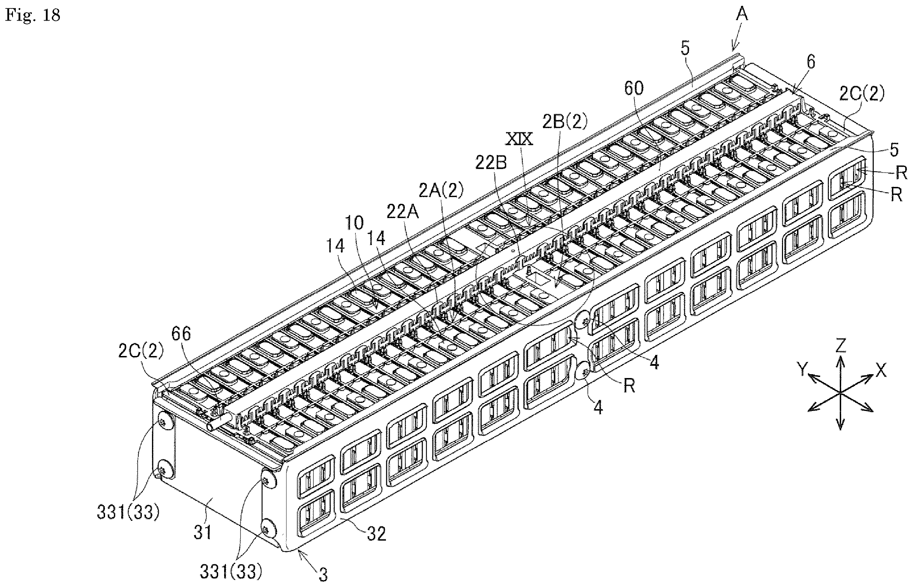

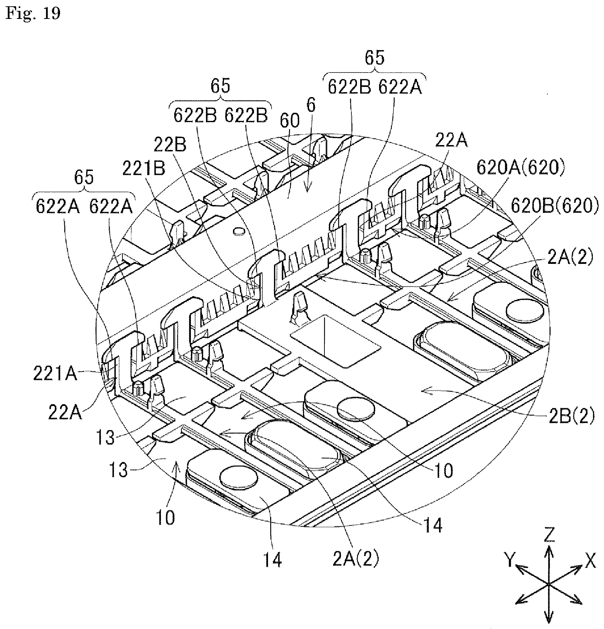

In a state where the locking portions 222A and 222B are engaged with the locked portion 65, the locking piece main bodies 221A and 221B are located between the second portions 622A of the two first convex parts 620A adjacent to each other in the X-axis direction, between the second portions 622B of the two second convex parts 620B adjacent to each other in the X-axis direction, or between the second portion 622A of the first convex part 620A and the second convex part 622B of the second convex part 620B adjacent to each other in the X-axis direction as shown in Figs. 18 and 19.

At this time, the rib 67 disposed between the convex parts 620 is in a state where the rib bites into the locking pieces 22A and 22B or pushes the locking pieces 22A and 22B. With such a configuration, when the energy storage apparatus 1 is disposed such that the Y-axis direction becomes the vertical direction and water such as dew condensation accumulates at the boundary position between the energy storage device 10 and the duct portion 6 and the sealing portion 7, the movement of the water through (a gap or the like) between the locking pieces 22A and 22B (specifically, the locking piece main bodies 221A and 221B) and the duct portion 6 is suppressed. With such a configuration, it is possible to suppress the occurrence of conduction caused by the water between the energy storage devices 10 adjacent to each other.

The two locking portions 222A and 222B of the locking pieces 22A and 22B are engaged with the second portions 622A and 622B (the locked portion 65) by causing the end portions of the locking portions 222A and 222B on the other side in the Z-axis direction to abut on the locking inclined surfaces 6221A and 6221B of the facing second portions 622A and 622B. The end portions of the locking portions 222A and 222B, which abut on the second portions 622A and 622B, on the other side in the Z-axis direction have shapes corresponding to the end portions of the second portions 622A and 622B on one side in the Z-axis direction. The end portions of the locking portions 222A and 222B on the other side in the Z-axis direction according to the embodiment are inclined surfaces corresponding to the locking inclined surfaces 6221A and 6221B of the second portions 622A and 622B (see Figs. 7 and 9). By engaging the locked portion 65 with the two locking portions 222A and 222B of the locking pieces 22A and 22B to the locked portion 65 of the duct portion 6 as described above, the duct portion 6 is locked to the apparatus main body A in the energy storage apparatus 1 of the embodiment.

Returning to Figs. 1 and 2, the plate portion C includes a plurality of bus bars B, a plate portion main body 8 accommodating the plurality of bus bars B, and a harness 9 including a plurality of electric wires connected to the bus bars B.

The bus bar B is a plate-like member made of metal or the like having conductivity, and connects the terminals 14 of the different energy storage devices 10 to each other to make the terminals conductive with each other. The bus bar B of the embodiment is welded to the terminal 14.

The harness 9 includes a cable portion 91 including a plurality of electric wires and a connector 92 disposed at an end of the cable portion 91. An end of the electric wire on the other side is connected to the bus bar B or the like, and an end of the electric wire on one side is connected to the connector 92.

The cable portion 91 is formed by bundling at least some of the plurality of electric wires having the ends on the other side connected to the bus bars B or the like. The cable portion 91 is disposed in the plate portion main body 8 in a state where an end portion on one side protrudes from the plate portion main body 8 in the X-axis direction. The connector 92 is attached to a tip of the cable portion 91 in the protruding direction. The connector 92 of the embodiment is a multi-core connector, and two connectors are disposed.

The plate portion main body 8 is made of an insulating material such as resin, and is a plate-like portion or member that covers a surface of the apparatus main body A (stacked product D) on which the terminals 14 are arranged. The plate portion main body 8 is a rectangular member whose dimension in the Z-axis direction is smaller than a dimension in the X-axis direction and a dimension in the Y-axis direction. The plate portion main body 8 of the embodiment has a size that covers the apparatus main body A (stacked product D) as viewed in the Z-axis direction. The plate portion main body 8 includes a bus bar accommodating portion 81 that accommodates the bus bar B in a state of being connected to the terminal 14 of the energy storage device 10, an electric wire arrangement portion 82 in which the harness 9 is disposed, and a plurality of lid portions 83. The plate portion main body 8 includes a duct arrangement portion 85 where a part (in the embodiment, the gas release valves 132 of the plurality of energy storage devices 10) of the stacked product D is exposed when viewed from the plate portion C toward the apparatus main body A (when viewed from one side to the other side in the Z-axis direction) in a state where the duct portion 6 is removed.

The plate portion main body 8 of the embodiment includes two bus bar accommodating portions 81 disposed at positions sandwiching the duct arrangement portion 85 in the Y-axis direction, and a plurality of connecting portions 84 extending in the Y-axis direction and connecting the two bus bar accommodating portions 81, and the plurality of connecting portions 84 is disposed at intervals in the X-axis direction.

The two bus bar accommodating portions 81 accommodate the plurality of bus bars B in a state of surrounding the periphery of at least one (two in the example of the embodiment) bus bar B with a wall.

The electric wire arrangement portion 82 is a groove-shaped portion in the plate portion main body 8, and the cable portion 91 of the harness 9 is disposed inside.

The plurality of lid portions 83 is a plate-like portion that openably closes an end portion opening of the wall, which surrounds the bus bar B, on one side in the Z-axis direction in the bus bar accommodating portion 81. The lid portion 83 has a rectangular plate shape, and a part of a peripheral edge of the lid portion 83 and a part of the wall surrounding the bus bar B are connected to each other.

The energy storage apparatus 1 of the embodiment configured as described above includes: the plurality of energy storage devices 10 including the gas release valve 132 and arranged in the X-axis direction (first direction); the duct portion 6; the sealing portion 7 sandwiched between the plurality of energy storage devices 10 and the duct portion 6; and the adjacent members 2A and 2B disposed between the energy storage devices 10 adjacent to each other in the X-axis direction. The adjacent members 2A and 2B include the main body portions (adjacent member main bodies) 21A and 21B located between the energy storage devices 10, and the locking pieces 22A and 22B, and the locking pieces 22A and 22B include the locking piece main bodies 221A and 221B extending from the main body portions 21A and 21B along the duct portion 6 in the Z-axis direction (second direction), which is the facing direction of the gas release valve 132 and the duct portion 6, and the locking portions 222A and 222B extending, in the extending direction of the duct portion 6, from positions spaced apart from the main body portions 21A and 21B in the locking piece main bodies 221A and 221B.

In the energy storage apparatus 1 of the first embodiment, the sealing portion 7 and the duct portion 6 are pressed (in the Z-axis direction) toward the plurality of energy storage devices 10 (the apparatus main body A) such that the sealing portion 7 is located between the energy storage device 10 and the duct portion 6, and the locking portions 222A and 222B of the locking pieces 22A and 22B of the adjacent members 2A and 2B are engaged with (hooked on) the duct portion 6, whereby the duct portion 6 is locked to the adjacent members 2A and 2B. At this time, the locking portions 222A and 222B extending from the locking piece main bodies 221A and 221B extend in the extending direction (in the example of the embodiment, the X-axis direction) of the duct portion 6. With such a configuration, when the duct portion 6 is locked to the locking pieces 22A and 22B of the adjacent members 2A and 2B, the hooking of the locking pieces 22A and 22B on the sealing portion 7 is suppressed. As a result, the positional displacement and deformation of the sealing portion 7 at the time of attaching the duct portion 6 are suppressed. In a case where the locking portion of the locking piece protrudes toward the inner side (duct portion side) in the Y-axis direction as in the conventional technique, when the duct portion is attached to the apparatus main body so as to be pressed in the Z-axis direction, the locking portion of the locking piece may be hooked on the sealing portion, and the sealing portion may be displaced or deformed. As in the energy storage apparatus 1 of the embodiment, since the locking portions 222A and 222B of the locking pieces 22A and 22B extend in the extending direction of the duct portion 6, the hooking of the locking portions 222A and 222B on the sealing portion 7 at the time of attaching the duct portion 6 is suppressed.

In the energy storage apparatus 1 of the first embodiment, the locking portions 222A and 222B extending in the extending direction of the duct portion 6 extend from the locking piece main bodies 221A and 221B to each of one side and the other side in the extending direction of the duct portion 6. As described above, the locking portions 222A and 222B extend from the locking piece main bodies 221A and 221B to each of one side and the other side in the extending direction of the duct portion 6, so that the number of locking positions between the duct portion 6 and the locking pieces 22A and 22B increases (the locking portions engage with the duct portion 6 at two positions with respect to one locking piece). With such a configuration, the duct portion 6 is firmly locked to the adjacent members 2A and 2B.

In the energy storage apparatus 1 of the first embodiment, the duct portion 6 includes the duct portion main body 60 extending in the X-axis direction (first direction), and the locked portion 65 (in the embodiment, the second portions 622A and 622B of the convex part 620) protruding from the duct portion main body 60 in the direction away from the duct portion main body 60 in the Y-axis direction and extending in the X-axis direction (extending direction of the duct portion 6). The locked portion 65 includes the locking inclined surfaces 6221A and 6221B on which the locking portions 222A and 222B extending in the Y-axis direction abut at the end portion on one side (side opposite to the plurality of energy storage devices 10) in the Z-axis direction (second direction) and which approach the plurality of energy storage devices 10 toward the duct portion main body 60 in the protruding direction of the locked portion 65 (the protruding direction of the convex part 620 from the side wall portion 62).

According to such a configuration, the locking portions 222A and 222B abutting on (engaging with) the locking inclined surfaces 6221A and 6221B are hardly displaced in the direction away from the duct portion 6 (specifically, the side wall portion 62 of the duct portion main body 60) in the Y-axis direction. That is, the locking pieces 22A and 22B are hardly detached from the locked portion 65 (the second portions 622A and 622B).

In the energy storage apparatus 1 of the first embodiment, the duct portion 6 may include the duct portion main body 60 extending in the X-axis direction (first direction), the sealing portion 7 may be disposed between the plurality of energy storage devices 10 and the duct portion main body 60, and the locking pieces 22A and 22B may include, at the tip portions, the leading surfaces 223A and 223B approaching the duct portion main body 60 from the tips toward the base portions of the locking pieces 22A and 22B.

According to such a configuration, when the sealing portion 7 and the duct portion 6 are pressed toward the plurality of energy storage devices 10 (toward the other side in the Z-axis direction) such that the sealing portion 7 is located between the energy storage device 10 and the duct portion main body 60, and the duct portion 6 is locked to the adjacent members 2A and 2B by engaging the locking portions 222A and 222B of the locking pieces 22A and 22B with the duct portion 6, the duct portion main body 60 is guided to the position (mounting position) along the locking pieces 22A and 22B by pressing the duct portion main body 60 toward the energy storage device 10 side along the leading surfaces 223A and 223B, so that the duct portion 6 is easily locked to the adjacent members 2A and 2B.

In the energy storage apparatus 1 of the first embodiment, the base portions of the locking piece main bodies 221A and 221B are adjacent to the sealing portion 7 in the Y-axis direction. As described above, since the base portions of the locking piece main bodies 221A and 221B are adjacent to the sealing portion 7 in the Y-axis direction, the movement and deformation of the sealing portion 7 in the direction toward the locking piece main bodies 221A and 221B in the Y-axis direction are suppressed.

The energy storage apparatus of the present invention is not limited to the first embodiment, and it is needless to say that various modifications can be made without departing from the gist of the present invention. The configuration of one embodiment can be added to the configuration of another embodiment, and a part of the configuration of one embodiment can be replaced with the configuration of another embodiment. A part of the configuration of one embodiment can be deleted.

In the energy storage apparatus 1 of the first embodiment, the two locking pieces 22A and 22B are disposed at an interval in the Y-axis direction at the end portions of the adjacent members 2A and 2B on one side in the Z-axis direction. In other words, the two locking pieces are disposed so as to sandwich the duct portion 6 (specifically, the duct portion main body 60) in the Y-axis direction at the same position of the apparatus main body A in the X-axis direction, and a plurality of sets of the two locking pieces 22A and 22B is disposed at intervals in the X-axis direction. However, the two locking pieces are not limited to this configuration.

A plurality of the locking pieces 22A and 22B may be disposed at intervals in the X-axis direction so as to be alternately located on one side and the other side in the Y-axis direction in the duct portion main body 60. The arrangement positions of the locking pieces 22A and 22B are not limited as long as the positions are located along the duct portion 6, and the duct portion 6 can be locked to the apparatus main body A at the positions.

The locking pieces 22A and 22B of the first embodiment have a T shape, as viewed in the Y-axis direction, in which the two locking portions 222A and 222B extend from the locking piece main bodies 221A and 221B to one side and the other side in the X-axis direction, but are not limited to this configuration. The locking pieces 22A and 22B may be configured such that the locking portions 222A and 222B extend from the locking piece main bodies 221A and 221B only to one side or the other side in the X-axis direction. The locking portions 222A and 222B may be configured to extend from the locking piece main bodies 221A and 221B in a direction away from the duct portion main body 60 in the Y-axis direction.

The locked portion 65 of the duct portion 6 of the first embodiment includes the locking inclined surfaces 6221A and 6221A at the end portions of the second portions 622A and 622B, which form the locked portion 65, on one side in the Z-axis direction, but the locked portion is not limited to this configuration. The locked portion 65 may not include the locking inclined surfaces 6221A and 6221B. The locked portion 65 may be configured to engage with the locking pieces 22A and 22B.

The locking pieces 22A and 22B of the first embodiment include the leading surface 223A at the tip portions, but are not limited to this configuration. The locking pieces 22A and 22B may not include the leading surfaces 223A and 223B.

The leading surfaces 223A and 223B of the locking pieces 22A and 22B of the first embodiment are configured by the first leading surfaces 2231A and 2231B and the second leading surfaces 2232A and 2232B, but may be configured only by the first leading surfaces 2231A and 2231B.

In the energy storage apparatus 1 of the first embodiment, the sealing portion 7 is a belt-shaped foam including the sealing portion through-hole 71 at a position facing the gas release valve 132 of the energy storage device 10, but the sealing portion is not limited to this configuration. The sealing portion 7 may be formed of an adhesive for bonding the duct portion 6 and the apparatus main body A, or may be an O-ring or the like. The sealing portion 7 may be made of elastomer or the like, and may be formed by two-color molding together with the duct portion 6. The sealing portion 7 may be integrated with the duct portion 6.

In the energy storage apparatus 1 of the first embodiment, the member elongated in the X-axis direction and attached to the apparatus main body A so as to overlap the gas release valve 132 of the energy storage device 10 is the duct portion 6, but the duct portion is not limited to this configuration. The duct portion 6 may not include a configuration for guiding the gas discharged from the gas release valve 132 in the X-axis direction. An elongated member extending along the plurality of energy storage devices 10 may be disposed at the position of the duct portion 6 so as to face the gas release valve 132 of the energy storage device 10.

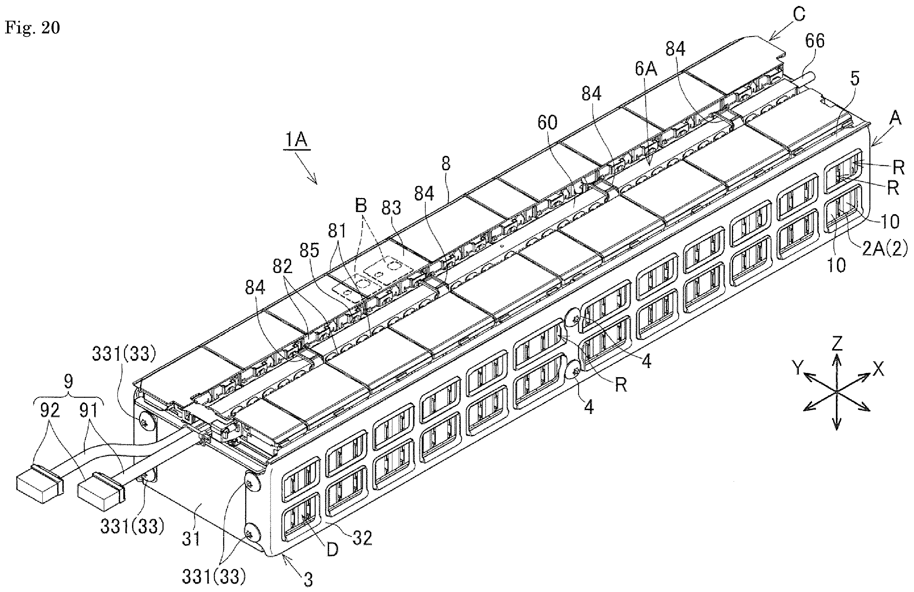

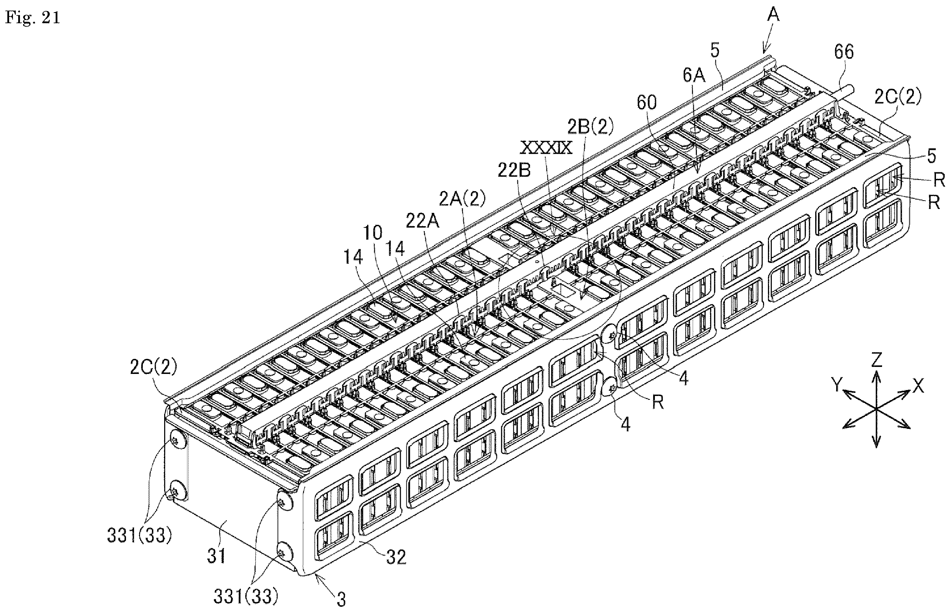

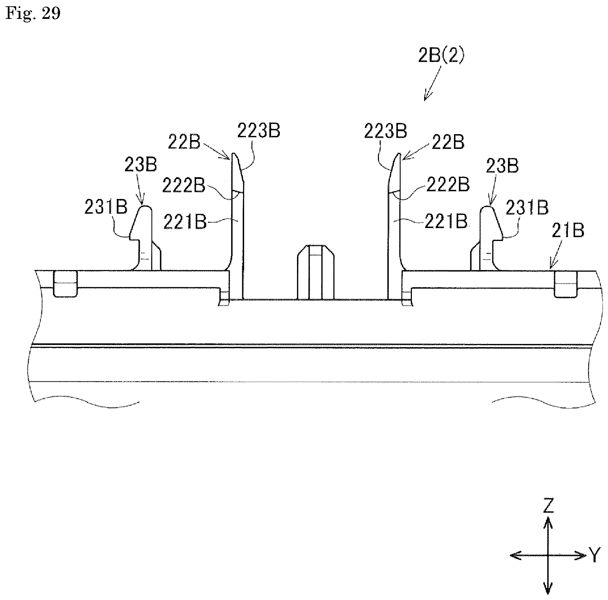

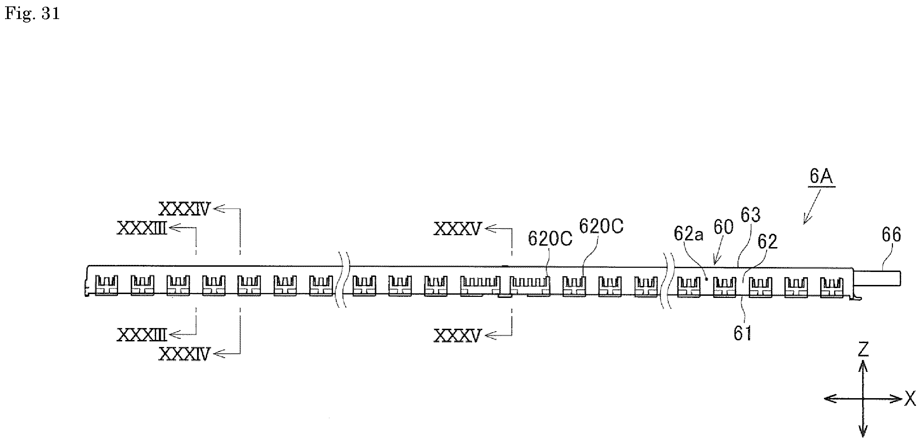

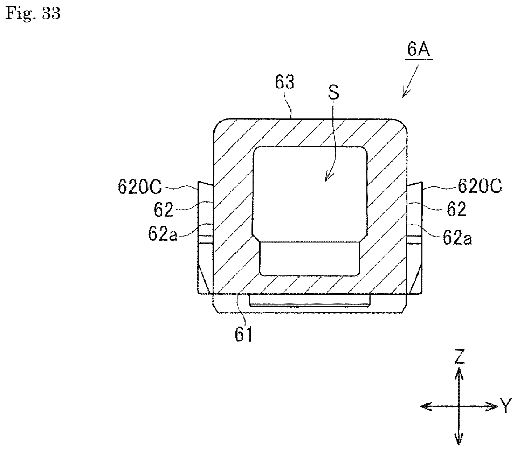

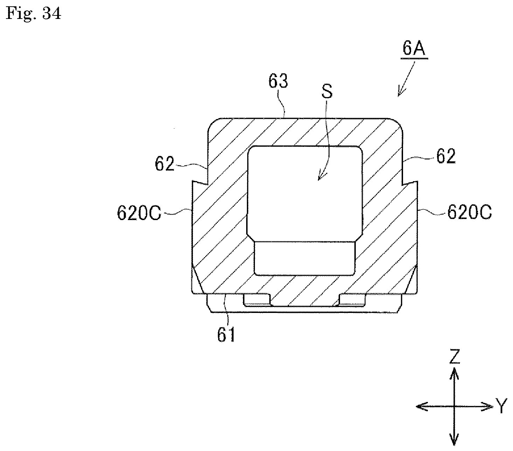

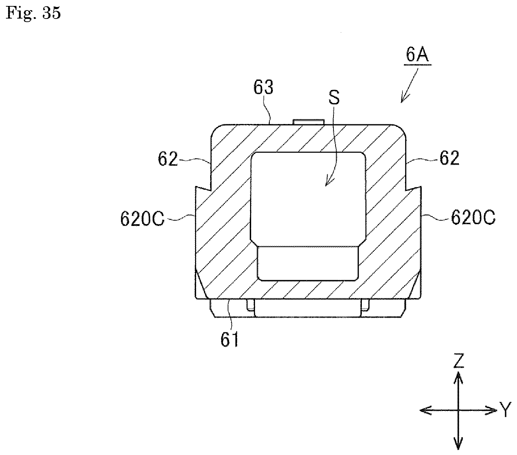

Next, an embodiment (hereinafter, referred to as a second embodiment) of another aspect of the present invention will be described with reference to Figs. 20 to 39. In the second embodiment, the same reference numerals are used for the same configurations as those of the first embodiment.

As shown in Figs. 20 to 24, an energy storage apparatus 1A of the embodiment includes: a plurality of energy storage devices 10 arranged in a first direction, the plurality of energy storage devices 10 including a gas release valve 132 disposed facing in a second direction orthogonal to the first direction; an adjacent member 2 disposed between the energy storage devices 10 adjacent to each other in the first direction; and a duct portion 6 extending in the first direction in a state of overlapping the gas release valves 132 of the plurality of energy storage devices 10 in the second direction, the duct portion guiding gas discharged from the gas release valve 132. The energy storage apparatus 1A includes a sealing portion 7 that suppresses gas leakage from between the plurality of energy storage devices 10 and the duct portion 6.

The energy storage apparatus 1A includes an apparatus main body A including the plurality of energy storage devices 10, the duct portion 6 attached to the apparatus main body A, the sealing portion 7 disposed between the apparatus main body A and the duct portion 6, and a plate portion C placed on a portion of the apparatus main body A where the duct portion 6 is attached. Hereinafter, the predetermined direction in which the energy storage devices 10 are arranged is defined as an X-axis direction (first direction) in an orthogonal coordinate system, a direction in which the apparatus main body A and the duct portion 6 are arranged is defined as a Z-axis direction (second direction) in the orthogonal coordinate system, and a direction orthogonal to each of the X-axis direction and the Z-axis direction is defined as a Y-axis direction (third direction) in the orthogonal coordinate system.

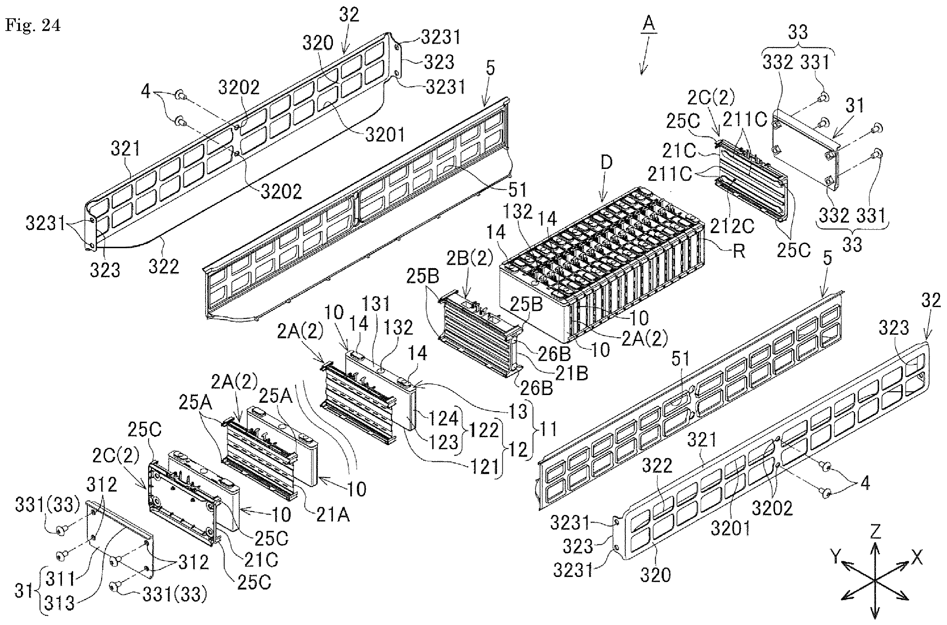

The configuration (Fig. 24) of the energy storage device 10 of the apparatus main body A is the same as that of the first embodiment.

The adjacent member 2 has an insulating property and is disposed between the plurality of energy storage devices 10 arranged in the X-axis direction or between the energy storage device 10 and a member (in the embodiment, a terminal portion 31 that is a part of a holding portion 3) arranged in the X-axis direction with respect to the energy storage device 10. The adjacent member 2 of the embodiment is formed of resin. The adjacent member 2 forms, between the adjacent member and the energy storage device 10 adjacent thereto, a flow channel R through which a temperature adjusting fluid (a gaseous body such as air in the example of the embodiment) can flow. The adjacent member 2 includes a plurality of types of adjacent members 2A, 2B, and 2C.

The adjacent member 2 includes the first adjacent member (adjacent member) 2A, the second adjacent member (adjacent member) 2B, and the third adjacent member 2C. The first adjacent member (adjacent member) 2A is disposed between two energy storage devices 10 adjacent to each other. The second adjacent member (adjacent member) 2B is disposed between two energy storage devices 10 adjacent to each other, and the third adjacent member 2C fixed to the holding portion 3 is disposed between the holding portion 3 and the energy storage device 10 located at the outermost end in the X-axis direction. The energy storage apparatus 1 may include, as the adjacent member 2, the first adjacent member 2A, the second adjacent member 2B, and the third adjacent member 2C. The energy storage apparatus 1 of the embodiment may include a plurality of first adjacent members 2A, one second adjacent member 2B, and two (a pair of) third adjacent members 2C. The plurality of first adjacent members 2A is disposed between the plurality of energy storage devices 10 except for a portion between the energy storage devices 10 where the second adjacent member 2B is disposed.

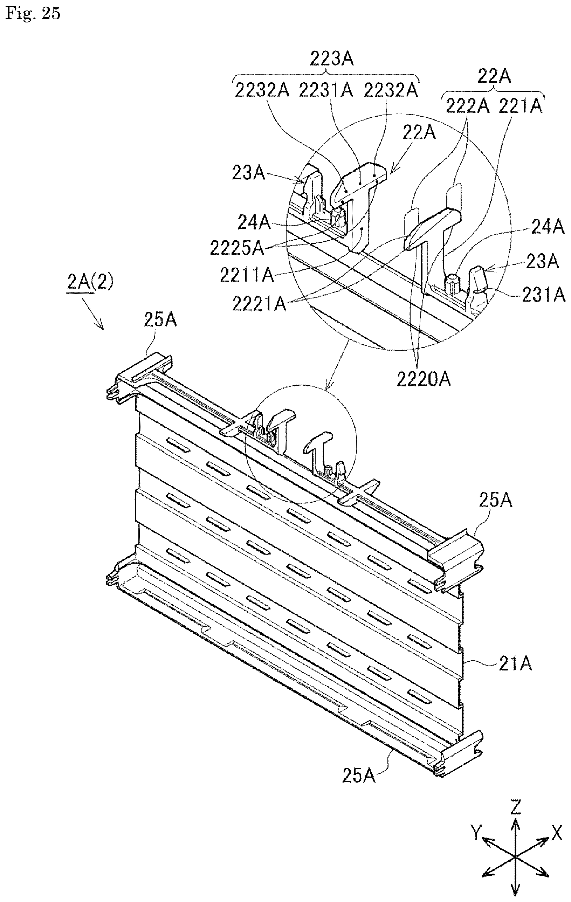

As also shown in Figs. 25 to 27, the plurality of first adjacent members 2A includes a first main body portion (main body portion) 21A located between the energy storage devices 10 and at least one first locking piece (hereinafter, it may be simply referred to as a locking piece) 22A.

The first adjacent member 2A includes: the first main body portion 21A expanding in a plane direction orthogonal to the X-axis direction between the energy storage devices 10 adjacent to each other in the X-axis direction; and the first locking piece 22A extending (protruding) from the first main body portion 21A toward one side in the Z-axis direction. The first locking piece 22A extends from the first main body portion 21A toward one side in the Z-axis direction (direction away from the first main body portion 21A), and extends in the X-axis direction along an end surface of the duct portion 6 in the Y-axis direction. In the embodiment, locking or lock means that two portions abut on (contact) each other, whereby one portion suppresses the movement of the other portion. For example, the first locking piece 22A abuts on a locked convex part 620C of the duct portion 6 so as to engage with the locked convex part by hooking or the like, thereby fixing the duct portion 6.

The first adjacent member 2A includes: at least one first coupling portion 23A extending (protruding) from the first main body portion 21A toward one side in the Z-axis direction and coupling the plate portion C; at least one positioning convex part 24A extending (protruding) from the first main body portion 21A toward one side in the Z-axis direction and positioning the plate portion C; and at least one first restricting portion 25A restricting the movement of the energy storage device 10 adjacent to the first main body portion 21A with respect to the first main body portion 21A.

The first adjacent member 2A of the embodiment includes two (a pair of) first locking pieces 22A, two (a pair of) first coupling portions 23A, and two (a pair of) positioning convex parts 24A.

The first main body portion 21A is a portion that faces the energy storage device 10 in a state where a part of the first main body portion abuts on a long wall portion 123 of a case 11 of the energy storage device 10. The first main body portion 21A forms, in cooperation with the energy storage device 10 adjacent thereto, the flow channel R through which the temperature adjusting fluid can flow between the first main body portion and the energy storage device 10. The first main body portion 21A of the embodiment has a rectangular plate shape having a size that faces the entire surface of the long wall portion 123 of the case 11 of the energy storage device 10 as viewed in the X-axis direction, and has a rectangular corrugated cross section along an X-Z plane (a plane including the X-axis direction and the Z-axis direction).

The two first locking pieces 22A extend from positions spaced apart in the Y-axis direction at an end portion of the first main body portion 21A on one side in the Z-axis direction. The space between the two first locking pieces 22A in the Y-axis direction is substantially the same as a space between outer surfaces 62a of a pair of side wall portions 62 of the duct portion 6 in the Y-axis direction. The two first locking pieces 22A are plate-like (in other words, plate-like along the X-Z plane) with the Y-axis direction as a thickness direction.

The first locking piece 22A extends to one side farther than a central portion in the Z-axis direction in an end surface of the duct portion 6 in the Y-axis direction (see Fig. 27). In the first locking piece 22A, a portion facing a section from an end edge position on the other side in the Z-axis direction (direction toward the first main body portion 21A) in the end surface of the duct portion 6 in the Y-axis direction to at least the central portion is in contact with the end surface (see Fig. 27). The central portion in the Z-axis direction is a region including an intermediate point C1 of a dimension H1 of the duct portion 6 in the Z-axis direction and an intermediate point C2 of a total dimension H2 of the duct portion 6 and the sealing portion 7 in the Z-axis direction (an area from an end of the duct portion 6 on one side to an end of the sealing portion 7 on the other side in the Z-axis direction). When the intermediate point C1 is a reference point, the central portion is an area (area including the intermediate point C2) of 20% of the dimension of the duct portion 6 from the intermediate point C1 to the other side in the Z-axis direction. When the intermediate point C2 is a reference point, the central portion is an area of 10% of the dimension of the ±duct portion 6 in the Z-axis direction about the intermediate point C2 in the Z-axis direction.

The first locking piece 22A includes a locking piece main body 221A extending from the first main body portion 21A to one side in the Z-axis direction, and a locking portion 222A extending from the locking piece main body 221A in the X-axis direction. The first locking piece 22A includes, at a tip portion, a leading surface 223A that approaches the duct portion 6 from a tip of the first locking piece 22A toward the other side in the Z-axis direction.

The locking piece main body 221A is a band plate-like portion extending from the first main body portion 21A toward one side in the Z-axis direction along the duct portion 6 (specifically, the end surface of the duct portion 6 in the Y-axis direction). The locking piece main body 221A includes, on the inner side in the Y-axis direction, an inner side surface 2211A that is in contact with the duct portion 6.

In the Z-axis direction, an area from an end edge of the duct portion 6 on the other side to at least the central portion of the duct portion 6 is an area α1 in which the inner side surface 2211A is in contact with the end surface (outer surface 62a) of the duct portion 6 in the Y-axis direction. In the embodiment, the area α1 extends from the end edge (lower end in Fig. 27) of the duct portion 6 on the other side in the Z-axis direction to an end portion (upper end portion in Fig. 27) of the inner side surface 2211A on one side in the Z-axis direction beyond the central portion. The inner side surface 2211A of the embodiment is a flat surface expanding in the X-Z plane direction, and is in surface contact with the duct portion 6.

An area β of the inner side surface 2211A facing the sealing portion 7 is in contact with the sealing portion 7 (see Fig. 27). A portion from a boundary position of the locking piece main body 221A with the first main body portion 21A in the Z-axis direction to a position facing the central portion of the end surface of the duct portion 6 in the Y-axis direction is in contact with the sealing portion 7 and the duct portion 6.

The locking portion 222A is a portion extending in the X-axis direction (extending direction of the duct portion 6) from a position of the locking piece main body 221A spaced apart from the first main body portion 21A on one side in the Z-axis direction. The locking portion 222A of the embodiment extends from the locking piece main body 221A to one side and the other side in the X-axis direction. The first locking piece 22A includes two locking portions 222A. An end edge 2220A of the locking portion 222A on the other side in the Z-axis direction extends straight in the X-axis direction. The locking portion 222A includes an inclined portion 2221A that separates from the locking piece main body 221A from the tip of the first locking piece 22A toward the first main body portion 21A as viewed in the Y-axis direction.

The leading surface 223A is formed in an area extending over the locking piece main body 221A and the two locking portions 222A. The locking piece main body 221A includes a first leading surface 2231A, and the two locking portions 222A include second leading surfaces 2232A. The first leading surface 2231A and the second leading surfaces 2232A are connected to form one flat inclined surface (leading surface) 223A. End portions 2225A (portions along the end edges 2220A) on the other side in the Z-axis direction in inward facing surfaces of the two locking portions 222A are flat surfaces expanding in the X-Z plane direction. The portions 2225A along the end edges 2220A in the inward facing surfaces of the two locking portions 222A are connected to the inner side surface 2211A of the locking piece main body 221A and are in contact with the duct portion 6.

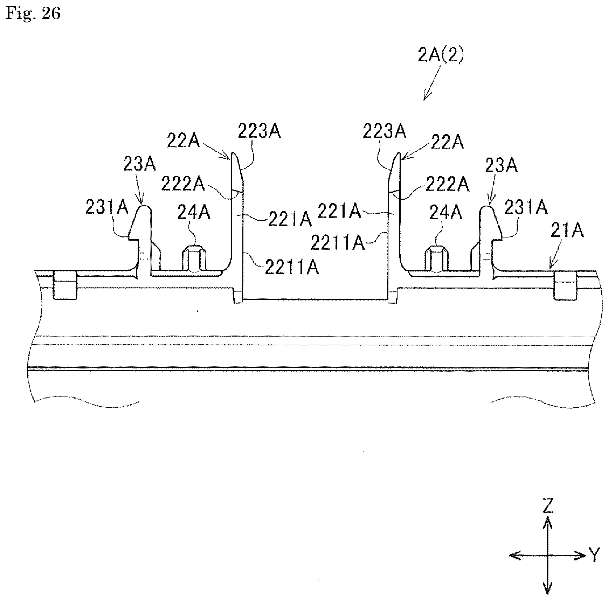

The two first coupling portions 23A extend from positions spaced apart in the Y-axis direction at the end portion of the first main body portion 21A on one side in the Z-axis direction. The two first coupling portions 23A are disposed at an interval in the Y-axis direction in a state where the two first locking pieces 22A are located between the two first coupling portions. The first coupling portion 23A and the first locking piece 22A are disposed at a predetermined interval in the Y-axis direction. The first coupling portion 23A includes, at a tip, a hook portion 231A whose dimension in the Y-axis direction increases to the outside toward the first main body portion 21A as viewed in the X-axis direction (see Fig. 26). The hook portion 231A is hooked on (engaged with) a predetermined portion of the plate portion C, whereby the plate portion C is locked.

The two positioning convex parts 24A extend from positions spaced apart in the Y-axis direction at the end portion of the first main body portion 21A on one side in the Z-axis direction. The positioning convex part 24A is disposed between the first locking piece 22A and the first coupling portion 23A. The positioning convex part 24A is inserted into the corresponding hole of the plate portion C to position the plate portion C with respect to the apparatus main body A.

The first restricting portion 25A extends in the X-axis direction from a corner portion of the first main body portion 21A having a rectangular shape, and abuts on the energy storage device 10 (specifically, the case 11) adjacent to the first main body portion 21A from the outside in a Y-Z plane direction, thereby restricting the relative movement of the energy storage device 10 in the Y-Z plane direction with respect to the first main body portion 21A. The first restricting portions 25A of the embodiment extend from the first main body portion 21A toward one side and the other side in the X-axis direction.

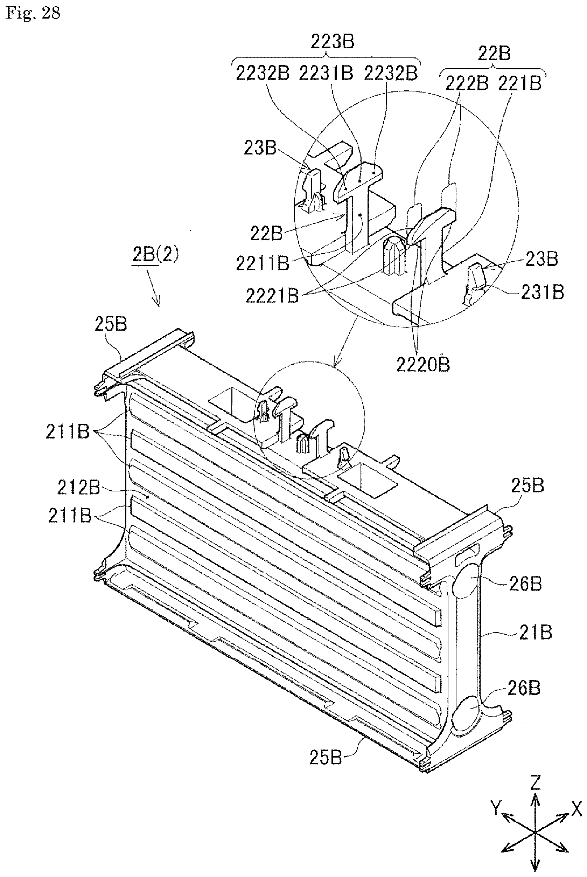

As also shown in Figs. 28 to 30, the second adjacent member 2B includes a second main body portion (adjacent member main body) 21B located between the energy storage devices 10 adjacent to each other and a second locking piece (hereinafter, it may be simply referred to as a locking piece) 22B.

The second adjacent member 2B includes: the second main body portion 21B expanding in a plane direction orthogonal to the X-axis direction between the energy storage devices 10 adjacent to each other in the X-axis direction; and the second locking piece 22B extending (protruding) from the second main body portion 21B toward one side (a direction away from the second main body portion 21B) in the Z-axis direction along the end surface of the duct portion 6 in the Y-axis direction and locking the duct portion 6. The second adjacent member 2B includes: a second coupling portion 23B extending (protruding) from the second main body portion 21B toward one side in the Z-axis direction and coupling the plate portion C; a second restricting portion 25B restricting the movement of the energy storage device 10 adjacent to the second main body portion 21B with respect to the second main body portion 21B; and a second fixing portion 26B used for fixing second the adjacent member 2B to the holding portion 3.

The second adjacent member 2B of the embodiment includes two (a pair of) second locking pieces 22B and two (a pair of) second coupling portions 23B. The second adjacent member 2B forms at least one flow channel R through which the temperature adjusting fluid can flow between the second adjacent member and the energy storage device 10 adjacent thereto.

The second main body portion 21B is a portion that faces the long wall portion 123 of the case 11 of the energy storage device 10 in a state where a part of the second main body portion abuts on the long wall portion. The second main body portion 21B forms, in cooperation with the energy storage device 10 adjacent thereto, the flow channel R through which the temperature adjusting fluid can flow between the second main body portion and the energy storage device 10. The dimension of the second main body portion 21B in the X-axis direction is larger (thicker) than the dimension of the first main body portion 21A in the X-axis direction. The second main body portion 21B of the embodiment has a rectangular plate shape having a size that faces the entire surface of the long wall portion 123 of the case 11 of the energy storage device 10 as viewed in the X-axis direction. The second main body portion 21B includes a plurality of convex strips 211B extending in the Y-axis direction and arranged at intervals in the Z-axis direction. The plurality of convex strips 211B protrudes from a facing surface 212B of the second main body portion 21B facing the energy storage device 10.

The two second locking pieces 22B extend from positions spaced apart in the Y-axis direction at one end of the second main body portion 21B in the Z-axis direction. The space between the two second locking pieces 22B in the Y-axis direction is substantially the same as the space between the pair of side wall portions 62 of the duct portion 6 in the Y-axis direction, similarly to the two first locking pieces 22A of the first adjacent member 2A. In the two second locking pieces 22B, a portion facing from an end edge position on the other side in the Z-axis direction in the end surface of the duct portion 6 in the Y-axis direction to the central portion in the Z-axis direction in the end surface of the duct portion 6 in the Y-axis direction is in contact with the end surface (see Fig. 30).

The configuration of the second locking piece 22B is the same as the configuration of the first locking piece 22A. The second locking piece 22B includes a locking piece main body 221B and a locking portion 222B. The locking portion 222B includes an inclined portion 2221B. The second locking piece 22B includes, at a tip portion, a leading surface 223B (first leading surface 2231B and second leading surface 2232B). The second locking piece 22B includes, on the inner side in the Y-axis direction, an inner side surface 2211B that is in contact with the duct portion 6. Similarly to the locking piece main body 221A of the first locking piece 22A, in the Z-axis direction, an area from the end edge of the duct portion 6 on the other side to at least the central portion of the duct portion 6 is an area α1 in which the inner side surface 2211B is in contact with the end surface (outer surface 62a) of the duct portion 6 in the Y-axis direction. In the embodiment, the area α1 extends from the end edge of the duct portion 6 on the other side in the Z-axis direction to an end portion of the inner side surface 2211B on one side in the Z-axis direction beyond the central portion. The inner side surface 2211B of the embodiment is a flat surface expanding in the X-Z plane direction, and is in surface contact with the duct portion 6.

An area (region) β of the inner side surface 2211B facing the sealing portion 7 is in contact with the sealing portion 7 (see Fig. 30). In the second locking piece 22B, similarly to the locking piece main body 221A of the first locking piece 22A, a portion from a boundary position of the locking piece main body 221B with the second main body portion 21B in the Z axis direction to at least a position facing the central portion of the end surface of the duct portion 6 in the Y direction is in contact with the sealing portion 7 and the duct portion 6.

The two second coupling portions 23B extend from positions spaced apart in the Y-axis direction at the end portion of the second main body portion 21B on one side in the Z-axis direction. Similarly to the two first coupling portions 23A of the first adjacent member 2A, the two second coupling portions 23B are disposed at an interval in the Y-axis direction in a state where the two second locking pieces 22B are located therebetween. The configuration of the second coupling portion 23B is the same as the configuration of the first coupling portion 23A. The second coupling portion 23B includes a hook portion 231B at a tip.

The second restricting portion 25B extends in the X-axis direction from a corner portion of the second main body portion 21B having a rectangular shape, and abuts on the energy storage device 10 (specifically, the case 11) adjacent to the second main body portion 21B from the outside in the Y-Z plane direction, thereby restricting the relative movement of the energy storage device 10 in the Y-Z plane direction with respect to the second main body portion 21B. The second restricting portion 25B of the embodiment extends from the second main body portion 21B toward each of one side and the other side in the X-axis direction.

The second fixing portion 26B is disposed at an end portion of the second main body portion 21B in the Y-axis direction. The second fixing portion 26B fixes the second adjacent member 2B to the holding portion 3 by engaging with the first fixing portion 4. The second fixing portion 26B of the embodiment is an insert nut. The first fixing portion 4 of the embodiment is a bolt. The first fixing portion 4 is screwed with the second fixing portion 26B in a state where the holding portion 3 is inserted, to fix the second adjacent member 2B to the holding portion 3.

The two third adjacent members 2C include: a third main body portion 21C expanding in a plane direction orthogonal to the X-axis direction between the energy storage device 10 adjacent to the third adjacent member in the X-axis direction and the terminal portion 31 that is a part of the holding portion 3; and a third restricting portion 25C restricting the movement of the energy storage device 10 adjacent to the third main body portion 21C with respect to the third main body portion 21C (see Fig. 24). The two third adjacent members 2C form at least one flow channel R through which the temperature regulating fluid can flow between the third adjacent member and the energy storage device 10 adjacent thereto.

The third main body portion 21C is a portion that faces the energy storage device 10 in a state where a part of the third main body portion abuts on the long wall portion 123 of the energy storage device 10. Similarly to the first main body portion 21A of the first adjacent member 2A and the second main body portion 21B of the second adjacent member 2B, the third main body portion 21C also forms, in cooperation with the energy storage device 10 adjacent thereto, the flow channel R through which the temperature adjusting fluid can flow between the third main body portion and the energy storage device 10. The third main body portion 21C of the embodiment has a rectangular plate shape having a size that faces the entire surface of the long wall portion 123 of the case 11 of the energy storage device 10 as viewed in the X-axis direction. The third main body portion 21C includes a plurality of convex strips 211C extending in the Y-axis direction and arranged at intervals in the Z-axis direction. The plurality of convex strips 211C protrudes from a facing surface 212C of the third main body portion 21C facing the energy storage device 10.

The third restricting portion 25C extends in the X-axis direction from a corner portion of the third main body portion 21C having a rectangular shape, and abuts on the energy storage device 10 (specifically, the case 11) adjacent to the third main body portion 21C from the outside in the Y-Z plane direction, thereby restricting the relative movement of the energy storage device 10 in the Y-Z plane direction with respect to the third main body portion 21C. The third restricting portion 25C of the embodiment extends from the third main body portion 21C in a direction toward the energy storage device 10 in the X-axis direction.

The configurations of the holding portion 3, the insulator 5, and the sealing portion 7 are the same as those of the first embodiment.

As shown in Figs. 20 to 23 and 31 to 35, the duct portion 6A includes a duct portion main body 60 that guides gas discharged from the gas release valve 132 of the energy storage device 10, and a locked convex part 620C that is engaged with the locking pieces 22A and 22B (specifically, the locking portions 222A and 222B of the locking pieces 22A and 22B) of the adjacent member 2. The duct portion 6 includes a joint portion 66 to which another member is connected and from which gas in the duct portion main body 60 can be released. The duct portion 6 of the embodiment is made of a resin such as polybutylene terephthalate or a glass fiber blended resin (polybutylene terephthalate-glass fiber).

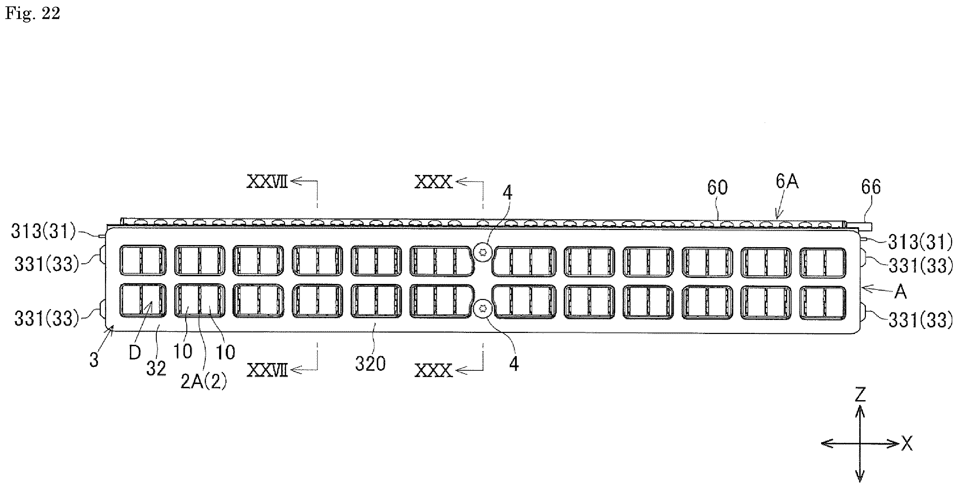

The duct portion main body 60 is a hollow tubular portion extending in the X-axis direction and including a guide space S therein. The duct portion main body 60 of the embodiment extends from an end of the apparatus main body A on one side (left side in Fig. 22) to an end thereof on the other side (right side in Fig. 22) in the X-axis direction, and the end on one side is closed. The duct portion main body 60 is disposed at a position overlapping the gas release valve 132 of the energy storage device 10 in the apparatus main body A as viewed in the Z-axis direction.

The duct portion main body 60 includes: a bottom wall portion 61 facing the apparatus main body A; a pair of side wall portions 62 extending from both ends of the bottom wall portion 61 in the Y-axis direction to one side in the Z-axis direction; and a top wall portion 63 connecting end portions of the pair of side wall portions 62 on one side in the Z-axis direction. A space surrounded by the bottom wall portion 61, the pair of side wall portions 62, and the top wall portion 63 forms the guide space S capable of guiding the gas discharged from the gas release valve 132 to the joint portion 66.

The bottom wall portion 61 is a belt-shaped portion whose width direction is the Y-axis direction and whose longitudinal direction is the X-axis direction, and is a portion that sandwiches the sealing portion 7 between the bottom wall portion and the apparatus main body A in the duct portion main body 60. The bottom wall portion 61 includes a duct portion through-hole 611 that allows the sealing portion through-hole 71 and the guide space S to communicate with each other at a position facing the sealing portion through-hole 71 of the sealing portion 7 in the Z-axis direction (a position facing the gas release valve 132 of the energy storage device 10). The bottom wall portion 61 includes a plurality of duct portion through-holes 611. The plurality of duct portion through-holes 611 is arranged in a row at intervals in the X-axis direction in the bottom wall portion 61. The bottom wall portion 61 is a portion of the duct portion main body 60 that sandwiches the sealing portion 7 between the duct portion main body and the apparatus main body A.

The pair of side wall portions 62 are belt-shaped portions expanding in the X-Z plane direction. The pair of side wall portions 62 are belt-shaped portions whose width direction is the Z-axis direction and whose longitudinal direction is the X-axis direction. The outer surface 62a of the side wall portion 62 forms the end surface of the duct portion 6 in the Y-axis direction, and the inner side surfaces 2211A and 2211B of the first locking piece 22A of the first adjacent member 2A and the second locking piece 22B of the second adjacent member 2B are in surface contact with the outer surface 62a.

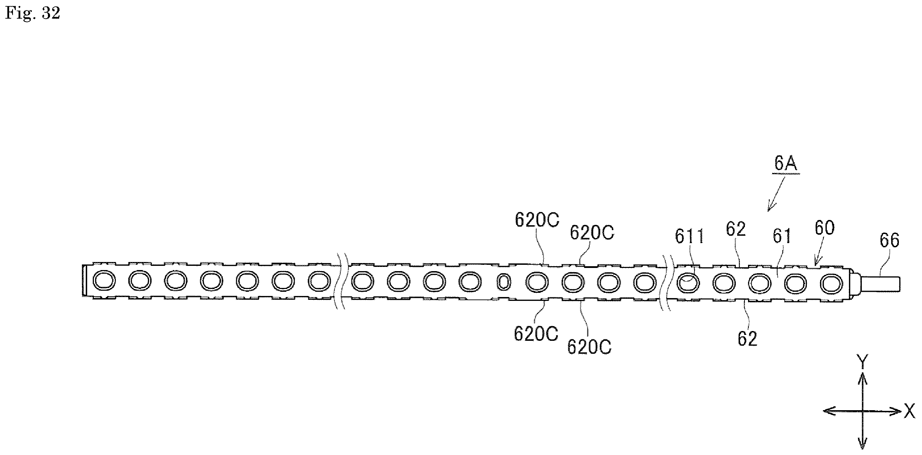

A plurality of locked convex parts 620C protruding from the side wall portion 62 (outer surface 62a) outward in the Y-axis direction and disposed at intervals in the X-axis direction is included. The duct portion 6 includes the plurality of locked convex parts 620C. The locked convex part 620C is disposed at a position facing, in the Y-axis direction, a position where the duct portion through-hole 611 exists in the X-axis direction (see Fig. 32).

The joint portion 66 is a portion extending in the X-axis direction from an end portion of the duct portion main body 60 on the other side in the X-axis direction. The joint portion 66 of the embodiment has a tubular shape that allows the guide space S and an external space to communicate with each other.

The duct portion 6 described above is attached to the apparatus main body A as follows.

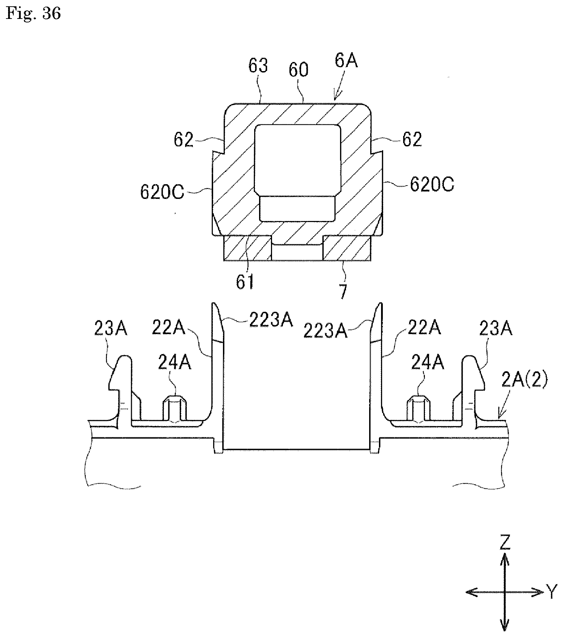

First, the duct portion 6 is pressed toward the other side in the Z-axis direction toward the mounting position of the apparatus main body A in a state where the sealing portion 7 is located the duct portion and the apparatus main body A (see Fig. 36).

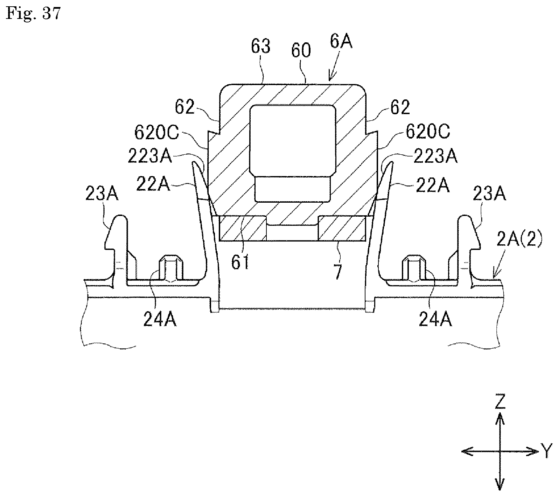

Subsequently, the locked convex parts 620C of the duct portion 6 abut on the leading surfaces 223A and 223B of the pair of locking pieces 22A and the pair of locking pieces 22B of the adjacent members 2A and 2B. When the duct portion 6 is further pressed toward the apparatus main body A, the pair of locking pieces 22A and the pair of locking pieces 22B bend such that distances between the tip portions of the pair of locking pieces 22A and the pair of locking pieces 22B increase (see Fig. 37).

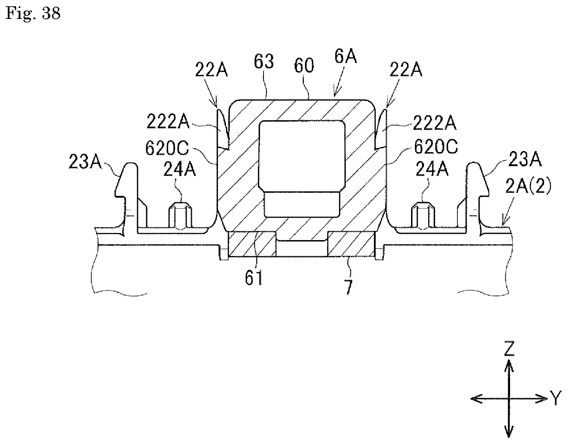

When the duct portion 6 is further pressed toward the apparatus main body A, the locking portions 222A and 222B of the pair of locking pieces 22A and the pair of locking pieces 22B pass through the locked convex part 620C to eliminate the bending, and the locking portions 222A and 222B engage with the locked convex part 620C (in the example of the embodiment, they are hooked: see Fig. 38). With such a configuration, the locking pieces 22A and 22B lock the duct portion 6 so as to prevent separation of the duct portion 6 from the main body portions 21A and 21B of the adjacent members 2A and 2B in the Z-axis direction.

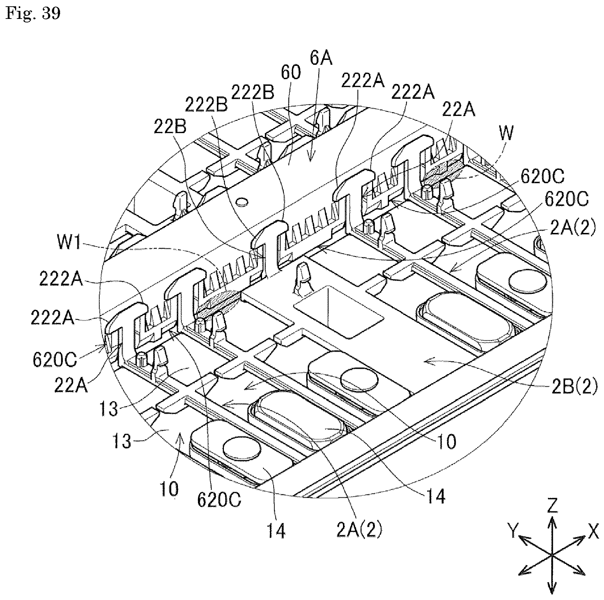

In a state where the locking portions 222A and 222B are engaged with the locked convex part 620C, the locking piece main bodies 221A and 221B of the adjacent members 2A and 2B are located between the two locked convex parts 620C adjacent to each other in the X-axis direction as shown in Fig. 39. At this time, the locking pieces 22A and 22B are in contact with the end portion of the sealing portion 7 in the Y-axis direction and the portion from the end edge on the other side (the energy storage device 10 side) in the Z-axis direction to the central portion in the outer surface (end surface in the Y-axis direction) 62a of the side wall portion 62 of the duct portion 6 without any gap (see Figs. 27 and 30). In the two locking portions 222A and 222B of the locking pieces 22A and 22B, the end edges 2220A and 2220B (see Figs. 25 and 28) of the locking portions 222A and 222B on the other side in the Z-axis direction are caused to abut on the locked convex parts 620C facing the end edges in the Z-axis direction to engage with the locked convex parts 620C. As described above, the locking portions 222A and 222B of the locking pieces 22A and 22B are engaged with the locked convex part 620C of the duct portion 6, whereby the duct portion 6 is locked to the apparatus main body A.

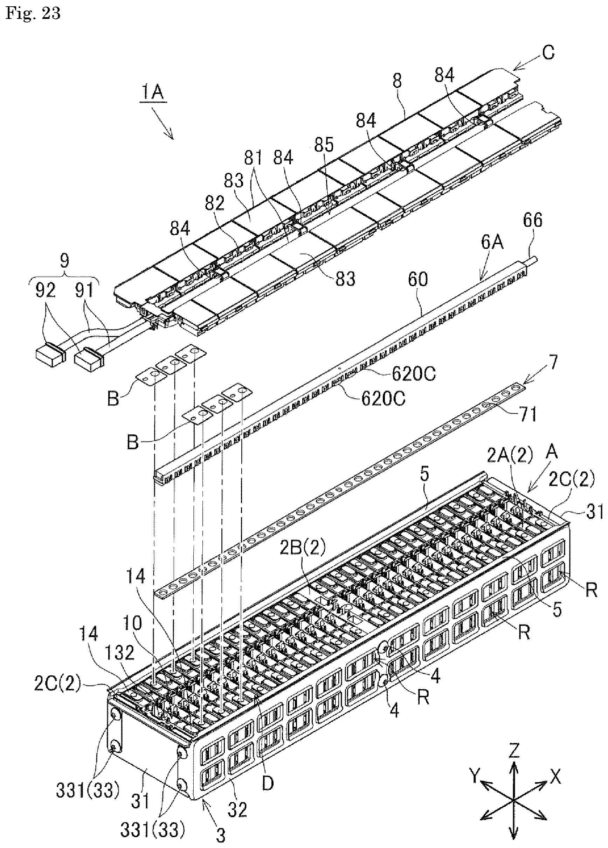

Returning to Figs. 20 and 23, the plate portion C includes a plurality of bus bars B, a plate portion main body 8 accommodating the plurality of bus bars B, and a harness 9 including a plurality of electric wires connected to the bus bars B. The configurations of the bus bar B, the plate main body 8, and the harness 9 are the same as those of the first embodiment.

The energy storage apparatus 1A of the second embodiment configured as described above includes: the plurality of energy storage devices 10 arranged in the X-axis direction (first direction), the plurality of energy storage devices 10 including the gas release valve 132 disposed facing in the Z-axis direction (second direction); the first or second adjacent member (adjacent member) 2A or 2B disposed between the energy storage devices 10 adjacent to each other in the X-axis direction; and the duct portion 6 extending in the X-axis direction in a state of overlapping the gas release valve 132 of each of the energy storage devices 10 in the Z-axis direction, the duct portion guiding the gas discharged from the gas release valve 132. The first or second adjacent member 2A or 2B includes: the first or second main body portion (adjacent member main body) 21A or 21B located between the energy storage devices 10 adjacent to each other; and the first or second locking piece (locking piece) 22A or 22B extending from the first or second main body portion 21A or 21B along the outer surface (end surface of the duct portion 6 in the Y-axis direction (third direction)) 62a of the side wall portion 62 in the duct portion 6 toward the direction away from the first or second main body portion 21A or 21B in the Z-axis direction, the first or second locking piece locking the duct portion 6. The first or second locking piece 22A or 22B extends in the direction away from the first or second main body portion farther than the central portion in the Z-axis direction in the outer surface 62a of the duct portion 6. In the first or second locking piece 22A or 22B, the portion (see reference numeral α1 in Figs. 27 and 30) facing a section from the end edge position closer to the first or second main body portion 21A or 21B in the outer surface 62a of the duct portion 6 in the Z-axis direction to the central portion is in contact with the outer surface 62a.

According to such a configuration, in a case where dew condensation water is generated at the end portion (in the embodiment, the lid plate 13) close to the position where the gas release valve 132 of the energy storage device 10 is disposed in a state where the energy storage apparatus 1A is disposed such that the Y-axis direction is the vertical direction, even if dew condensation water W1 flows along the surface of the energy storage device 10 (lid plate 13) in a direction approaching the duct portion 6 and accumulates at or in the vicinity of the boundary portion between the duct portion 6 and the plurality of energy storage devices 10 (apparatus main body A) (see reference numeral W1 in Figs. 27, 30, and 39), the duct portion 6 and the locking pieces 22A and 22B are in contact with each other (a state where the gap is suppressed), so that the occurrence of conduction due to the dew condensation water W1 or the like between the energy storage devices 10 adjacent to each other with the first or second adjacent member 2A or 2B interposed therebetween is suppressed. With such a configuration, generation of an electric corrosion in the energy storage device 10 (specifically, the case 11) is suppressed.

The energy storage apparatus 1A of the second embodiment includes the sealing portion 7 disposed between the apparatus main body A (the plurality of energy storage devices 10) and the duct portion 6 in the Z-axis direction and between the apparatus main body A (the plurality of energy storage devices 10) and the duct portion 6. In the first or second locking piece 22A or 22B, the portion from the boundary position with the first or second main body portion 21A or 21B in the Z-axis direction to at least the position facing the central portion of the outer surface 62a of the side wall portion 62 of the duct portion 6 is in contact with the sealing portion 7 and the duct portion 6. An area (portion) α2 of the first or second locking piece 22A or 22B in contact with the sealing portion 7 and the duct portion 6 in the Z-axis direction is from the boundary position with the first or second main body portion 21A or 21B in the Z-axis direction to at least the position facing the central portion of the outer surface 62a of the side wall portion 62 of the duct portion 6.

According to such a configuration, since the sealing portion 7 is disposed between the apparatus main body A (the plurality of energy storage devices 10) and the duct portion 6 so as to be in contact with the first or second locking piece 22A or 22B, it is possible to suppress gas leakage (specifically, leakage of gas when the gas is released from the gas release valve 132 into the guide space S of the duct portion 6) from between the apparatus main body A (the plurality of energy storage devices 10) and the duct portion 6 while suppressing the occurrence of conduction due to dew condensation water or the like between the energy storage devices 10 adjacent to each other with the adjacent member 2A or 2B interposed therebetween.

In the energy storage apparatus 1A of the second embodiment, the first or second locking piece 22A or 22B includes the locking piece main body 221A or 221B extending in the direction away from the first or second main body portion 21A or 21B in the Z-axis direction from the first or second main body portion 21A or 21B, and the locking portion 222A or 222B extending in the X-axis direction from the locking piece main body 221A or 221B, and the duct portion 6 includes the locked convex part 620C to which the locking portion 222A or 222B is locked (in the example of the embodiment, it is hooked) at the position adjacent to the locking piece main body 221A or 221B in the extending direction of the locking portion 222A or 222B in the X-axis direction. With such a configuration, it is possible to reduce the size (thickness) of the first or second locking piece 22A or 22B in the Y-axis direction.

In the energy storage apparatus 1A of the second embodiment, the first or second locking piece 22A or 22B locks the duct portion 6 so as to prevent separation of the duct portion 6 from the first or second main body portion 21A or 21B in the Z-axis direction. With such a configuration, the movement of the duct portion 6 in a direction away from the apparatus main body A (the plurality of energy storage devices 10) is suppressed, and as a result, gas leakage from between the duct portion 6 and the apparatus main body A (the plurality of energy storage devices 10) at the time of discharging the gas from the gas release valve 132 is suppressed.

The energy storage apparatus of the present invention is not limited to the second embodiment, and it is needless to say that various modifications can be made without departing from the gist of the present invention. The configuration of one embodiment can be added to the configuration of another embodiment, and a part of the configuration of one embodiment can be replaced with the configuration of another embodiment. Furthermore, a part of the configuration of an embodiment can be deleted.

In the energy storage apparatus 1A of the second embodiment, the locking portion 222A or 222B of the first or second locking piece 22A or 22B extends from the locking piece main body 221A or 221B to one side and the other side in the X-axis direction, but the locking portion is not limited to this configuration. The locking portions 222A and 222B may be configured to extend (protrude) from the locking piece main bodies 221A and 221B to only one of one side and the other side in the X-axis direction, or may be configured to extend (protrude) from the locking piece main bodies 221A and 221B to at least one of the inner side (the central side of the apparatus main body) and the outer side (the outer side of the apparatus main body) in the Y-axis direction. The locking portions 222A and 222B may extend from the locking piece main bodies 221A and 221B at least in any of the X-axis direction and the Y-axis direction.

The specific configuration of the locked convex part 620C is not limited. The locked convex part 620C may be configured such that the duct portion 6 is locked to the apparatus main body A (the plurality of energy storage devices 10) by the locking pieces 22A and 22B being hooked or the like.

In the outer surface (end surface in the Y-axis direction) 62a of the side wall portion 62 of the duct portion main body 60 of the second embodiment, a cross-sectional shape in the Y-Z plane direction at a position except for the locked convex part 620C in the X-axis direction is linear (see Figs. 27 and 30), but the cross-sectional shape is not limited to this configuration. The cross-sectional shape of the outer surface 62a of the side wall portion 62 in the Y-Z plane direction may be curved or bent. In this case, the portion (contact portion) of the first or second locking piece 22A or 22B from the boundary position with the first or second main body portion 21A or 21B to at least the central portion of the side wall portion 62 in the Z-axis direction has a shape along the outer surface 62a of the side wall portion 62. The first or second locking piece 22A or 22B has a shape that is in contact with the outer surface 62a of the side wall portion 62 without a gap or substantially without a gap.

The contact portion of the first or second locking piece 22A or 22B is in surface contact with the side wall portion 62 and the like of the duct portion 6, but the contact portion is not limited to this configuration. The contact portion of the first or second locking piece 22A or 22B may be, for example, in line contact as long as the contact portion is in contact with the side wall portion 62 so that water does not pass between the contact portion and the side wall portion 62 in the X-axis direction.

In the energy storage apparatus 1A of the second embodiment, the sealing portion 7 is a belt-shaped foam including the sealing portion through-holes 71 at positions facing the gas release valves 132 of the plurality of energy storage devices 10, but the sealing portion is not limited to this configuration. The sealing portion 7 may be formed of an adhesive for bonding the duct portion 6 and the apparatus main body A, or may be an O-ring or the like. The sealing portion 7 may be made of elastomer or the like, and may be formed by two-color molding together with the duct portion 6. The sealing portion 7 may be integrated with the duct portion 6.

In the first and second embodiments, the case where the energy storage device is used as a chargeable/dischargeable nonaqueous electrolyte secondary battery (lithium ion secondary battery) has been described, but the type and size (capacity) of the energy storage device are arbitrary. The present invention is also applicable to various secondary batteries, primary batteries, and energy storage devices of capacitors such as electric double layer capacitors.

In order to express the present invention, the present invention has been appropriately and sufficiently described through the first and second embodiments with reference to the drawings in the above description, but it should be recognized that those skilled in the art can easily change and/or improve the above embodiments. Therefore, as long as the modifications or improvements implemented by those skilled in the art are not at a level departing from the scope of the claims described in the claims, the modifications or improvements are interpreted to be included in the scope of the claims.

### DESCRIPTION OF REFERENCE SIGNS

1, 1A: energy storage apparatus
2: adjacent member
2A: first adjacent member (adjacent member)
21A: first main body portion (adjacent member main body)
22A: first locking piece (locking piece)
221A: locking piece main body
2211A: inner side surface
222A: locking portion
2220A: end edge
2221A: inclined portion
2225A: portion along end edge
223A: leading surface
2231A: first leading surface
2232A: second leading surface
23A: first coupling portion
231A: hook portion
24A: positioning convex part
25A: first restricting portion
2B: second adjacent member (adjacent member)
21B: second main body portion (adjacent member main body)
211B: convex strip
212B: facing surface
22B: second locking piece (locking piece)
221B: locking piece main body
2211B: inner side surface
222B: locking portion
2221B: inclined portion
223B: leading surface
2231B: first leading surface
2232B: second leading surface
23B: second coupling portion
231B: hook portion
25B: second restricting portion
26B: second fixing portion
2C: third adjacent member
21C: third main body portion
211C: convex strip
212C: facing surface
25C: third restricting portion
3: holding portion
31: terminal portion
311: terminal portion main body
312: through-hole
313: flange portion
32: extending portion
320: extending portion main body
3201: ventilation port
3202: first fixing hole
321: first piece portion
322: second piece portion
323: third piece portion
3231: second fixing hole
33: joining portion
331: bolt
332: nut
5: insulator
51: ventilation region
6, 6A: duct portion
60: duct portion main body
61: bottom wall portion
611: duct portion through-hole
62: side wall portion
620: convex part
620A: first convex part (convex part)
621A: first portion
6211A: inclined surface
622A: second portion
6221A: locking inclined surface (end surface)
620B: second convex part (convex part)
621B: first portion
6211B: inclined surface
622B: second portion
6221B: locking inclined surface (end surface)
620C: locked convex part (convex part)
62a: outer surface
63: top wall portion
65: locked portion
66: joint portion
67: rib
7: sealing portion
71: sealing portion through-hole
8: plate portion main body
81: bus bar accommodating portion
82: electric wire arrangement portion
83: lid portion
84: connecting portion
85: duct arrangement portion
9: harness
91: cable portion
92: connector
10: energy storage device
11: case
12: case main body
121: closed portion
122: body portion
123: long wall portion
124: short wall portion
13: lid plate
131: lid plate main body
132: gas release valve
14: terminal
100: battery module
101: battery cell
1011: battery case
1012: battery lid
1013: gas release valve
102: battery cell stacked product
103: cell holder
104: duct locking portion
105: gas discharge duct
106: sealing material
107: cell holder locking portion
A: apparatus main body
B: bus bar
C: plate portion
C1, C2: intermediate point
D: stacked product
H1: dimension of duct
H2: total dimension of duct and sealing portion
R: flow channel
S: guide space
W1, W2: dew condensation water (water)
α1: area (portion) in contact with duct portion
α2: area (portion) in contact with duct portion and sealing portion
β: area (portion) facing sealing portion

## Claims

1. An energy storage apparatus comprising:
a plurality of energy storage devices including a gas release valve and arranged in a first direction;
a duct portion;
a sealing portion sandwiched between the plurality of energy storage devices and the duct portion; and
an adjacent member disposed between the energy storage devices adjacent to each other in the first direction, wherein
the adjacent member includes
an adjacent member main body located between the energy storage devices, and
a locking piece, and
the locking piece includes
a locking piece main body extending from the adjacent member main body along the duct portion in a second direction that is a facing direction of the gas release valve and the duct portion, and
a locking portion extending, in an extending direction of the duct portion, from a position spaced apart from the adjacent member main body in the locking piece main body, or a locking portion extending in a direction orthogonal to the second direction and away from the duct portion.

2. The energy storage apparatus according to claim 1, wherein the locking portion extending in the extending direction of the duct portion extends from the locking piece main body to one side and the other side in the extending direction of the duct portion.

3. The energy storage apparatus according to claim 1 or 2, wherein
the duct portion includes
a duct portion main body extending in the first direction, and
a locked portion protruding from the duct portion main body in a direction orthogonal to the second direction and away from the duct portion main body, the locked portion being engaged with the locking portion extending in the extending direction of the duct portion, and
the locked portion includes a locking inclined surface on which the locking portion extending in the extending direction of the duct portion abuts at an end portion on a side opposite to the plurality of energy storage devices in the second direction, the locking inclined surface approaching the plurality of energy storage devices toward the duct portion main body in a protruding direction of the locked portion.

4. The energy storage apparatus according to claim 1 or 2, wherein
the duct portion includes a duct portion main body extending in the first direction,
the sealing portion is disposed between the plurality of energy storage devices and the duct portion main body, and
the locking piece main body includes, at a tip portion, a leading surface approaching the duct portion main body from a tip toward a base portion of the locking piece main body.

5. The energy storage apparatus according to claim 1 or 2, wherein a base portion of the locking piece main body is adjacent to the sealing portion in a third direction orthogonal to each of the first direction and the second direction.

6. An energy storage apparatus comprising:
a plurality of energy storage devices arranged in a first direction, the plurality of energy storage devices including a gas release valve disposed facing in a second direction orthogonal to the first direction;
an adjacent member disposed between the energy storage devices adjacent to each other in the first direction; and
a duct portion extending in the first direction in a state of overlapping the gas release valves of the plurality of energy storage devices in the second direction, the duct portion guiding gas discharged from the gas release valves, wherein
the adjacent member includes
an adjacent member main body located between the energy storage devices adjacent to each other, and
a locking piece extending, from the adjacent member main body along an end surface of the duct portion in a third direction orthogonal to each of the first direction and the second direction, toward a direction away from the adjacent member main body in the second direction, the locking piece locking the duct portion,
the locking piece extends in the direction away from the adjacent member main body farther than a central portion of the end surface of the duct portion in the second direction, and
a portion of the locking piece is in contact with the end surface, the portion facing a section from an end edge position of the end surface of the duct portion closer to the adjacent member main body in the second direction to the central portion.

7. The energy storage apparatus according to claim 6,
further comprising a sealing portion between the plurality of energy storage devices and the duct portion in the second direction, wherein
a portion of the locking piece from a boundary position with the adjacent member main body in the second direction to a position facing the central portion of the end surface of the duct portion is in contact with the sealing portion and the duct portion.

8. The energy storage apparatus according to claim 6, wherein the locking piece includes a locking piece main body extending from the adjacent member main body in a direction away from the adjacent member main body in the second direction, and a locking portion extending from the locking piece main body in the first direction, and
the duct portion includes a locked convex part to which the locking portion is locked at a position adjacent to the locking piece main body in the extending direction of the locking portion in the first direction.
